# FASCICULE DE BREVET EUROPEEN

(11) **EP 3 977 084 B1**
(45) Date de publication et mention de la délivrance du brevet: **20.12.2023**
(21) Numéro de dépôt: 20728523.0
(22) Date de dépôt: 02.06.2020
(51) Int. Cl.: G01L 19/00, B60K 15/01, B60K 15/03, F02M 21/02, G01L 19/06

(54) **DISPOSITIF DE MESURE DE LA PRESSION DANS UN CIRCUIT D'ALIMENTATION EN GAZ COMPRIMÉ**
VORRICHTUNG ZUR DRUCKMESSUNG IN EINER VERSORGUNGSLEITUNG FÜR KOMPRIMIERTES GAS
DEVICE FOR MEASURING PRESSURE IN A COMPRESSED GAS SUPPLY CIRCUIT

(30) Priorité: 31.05.2019 FR 1905813
(43) Date de publication de la demande: 06.04.2022
(73) Titulaire: PLASTIC OMNIUM NEW ENERGIES FRANCE, 69007 Lyon (FR)
(72) Inventeur: BARRIO, Pierre, 1130 Bruxelles (BE); DEPARIS, Eric, 1130 Bruxelles (BE); BELLEC, Ronan, 1130 Bruxelles (BE); CRIEL, Bjorn, 1130 Bruxelles (BE)
(74) Mandataire: LLR
(86) Numéro de dépôt international: PCT/EP2020/065217
(87) Numéro de publication internationale: WO 2020/240043

(56) Documents cités:
- DE-A1-102004 039 169
- GB-A- 2 462 309
- US-A1- 2010 193 045

## Description

La présente invention concerne le domaine des circuits d'alimentation en gaz comprimé, notamment pour véhicules automobiles. Plus précisément, l'invention concerne principalement un dispositif de mesure de la pression dans un circuit d'alimentation en gaz comprimé pour véhicule automobile. Par l'expression « véhicule automobile », on entend désigner des véhicules terrestres et maritimes tels que des voitures particulières, des motos, des camions, des bus, des trains, des engins agricoles ou de génie civil.

On connaît des circuits d'alimentation en hydrogène gazeux comprimé pour véhicule électrique du type à pile à combustible. On connait aussi des circuits d'alimentation en gaz naturel pour véhicule au gaz naturel comprimé (appelé CNG). Dans de tels circuits d'alimentation, on trouve des réservoirs de stockage de gaz comprimé et des capteurs de pression. Les capteurs de pression servent, en particulier, à donner des informations sur la quantité de gaz introduite dans un réservoir lors de son remplissage, ainsi que des informations sur la quantité de gaz restante dans le réservoir lors de son utilisation. En effet, il existe une relation mathématique entre la pression, le volume et la température d'un gaz, cette relation s'exprime, par exemple, par l'équation des gaz parfaits ou l'équation de Van der Waals.

Dans un circuit d'alimentation en hydrogène gazeux, on utilise un capteur de pression capable de mesurer une pression de service pouvant atteindre 35 MPa (350 bar), voire 70 MPa (700 bar) à température ambiante. Dans un circuit d'alimentation en gaz naturel, on utilise un capteur de pression capable de mesurer une pression de service pouvant atteindre 20 MPa (200 bar), voire 30 MPa (300 bar) à température ambiante. Par l'expression « température ambiante », on entend désigner une plage de températures de 20 °C ± 10 °C. Sauf indication contraire, les valeurs de pression indiquées dans la suite sont des valeurs de pression à température ambiante.

On rappelle qu'un capteur de pression est généralement constitué de trois parties : un corps d'épreuve, un transducteur et un boîtier de capteur. Le capteur de pression est dit « actif » quand il est complété par un conditionneur de signal.

Le corps d'épreuve est l'élément mécanique du capteur de pression qui réagit à la grandeur physique à mesurer, ici la pression. Il transforme la grandeur physique à mesurer en une autre grandeur physique dite mesurable, cette grandeur constitue la réaction du corps d'épreuve. Le transducteur est une partie sensible associé au corps d'épreuve, il traduit les réactions du corps d'épreuve en une grandeur électrique constituant le signal de sortie. Le boîtier de capteur est un élément mécanique de protection, de maintien et de fixation du capteur de pression. Le conditionneur de signal, aussi appelé « transmetteur », permet de mettre en forme et d'amplifier le signal de sortie. Avantageusement, le conditionneur de signal permet aussi de filtrer, corriger et mettre à niveau le signal pour sa transmission vers un module de traitement, par exemple, une unité de contrôle électronique ECU (« Electronic Control Unit » en langue anglaise). Selon les besoins, le conditionneur de signal peut aussi alimenter électriquement le capteur de pression.

Typiquement, le capteur de pression d'un dispositif de mesure de la pression dans un circuit d'alimentation en gaz comprimé pour véhicule automobile est un capteur à déformation de solide, c'est-à-dire que le corps d'épreuve d'un tel capteur est un solide élastiquement déformable, par exemple, un diaphragme.

Par ailleurs, le signal de sortie d'un capteur de pression est une tension électrique exprimée en volt ou un courant électrique exprimé en ampère. Ainsi, la variation de pression exercée sur le capteur de pression se traduit par une variation de la tension électrique ou du courant électrique à la sortie du capteur de pression.

On rappelle qu'un capteur de pression est caractérisé, entre autres, par une plage de mesure, une étendue de mesure, une pression maximale de service et une précision de la mesure.

La plage de mesure de la pression nominale est la plage entre les limites inférieure et supérieure de la grandeur mesurée, ici la pression de service. La précision prescrite est respectée dans cette plage. L'étendue de mesure est la différence algébrique entre les valeurs seuils supérieure et inférieure d'une plage de mesure définie. La pression maximale de service, aussi appelée « surpression », est la pression maximale (à température maximale) indiquée par le fabricant du capteur de pression pour laquelle le corps d'épreuve est conçu d'un point vue mécanique. Le corps d'épreuve peut être utilisé jusqu'à la surpression sans que les caractéristiques techniques de mesure garanties par le fabricant ne soient altérées après le retour dans la plage de mesure. Toutefois, il n'existe plus dans la plage entre la limite supérieure de pression de service et la surpression une relation univoque entre la pression et le signal de sortie. La précision de la mesure d'un capteur est le pourcentage d'erreur de son signal de sortie par rapport à la valeur vraie (par définition théorique) que l'on cherche à mesurer.

A 700 bar, l'hydrogène possède une masse volumique d'environ 40 kg/m³ contre 0,090 kg/m³ à pression atmosphérique et à température ambiante. Ainsi, à 700 bar, on peut stocker 4,8 kg d'hydrogène dans un réservoir de 120 litres. Etant donné qu'on estime à 1 kg d'hydrogène la masse nécessaire pour parcourir 100 km au volant d'une voiture familiale, l'autonomie d'un tel véhicule équipé d'un réservoir de 120 litres d'hydrogène gazeux comprimé à 700 bar est de 480 km. Pour informer le conducteur de l'autonomie restante de son véhicule, une jauge et un témoin lumineux sont prévus sur le tableau de bord du véhicule. Le témoin lumineux s'allume quand la « réserve » du réservoir d'hydrogène est atteinte. La réserve du réservoir est un volume prévu dans le circuit d'alimentation pour stocker une quantité de gaz suffisante pour rouler jusqu'à la station de service la plus proche. Une réserve de 740 g d'hydrogène est typiquement prescrite par les constructeurs automobiles. En effet, avec 740 g d'hydrogène, l'autonomie du véhicule est de 74 km, ce qui est généralement suffisant pour rejoindre une station de service.

Par ailleurs, d'après le règlement (UE) N° 406/2010 portant application du règlement (CE) n° 79/2009 du Parlement européen et du Conseil concernant la réception par type des véhicules à moteur fonctionnant à l'hydrogène, il est interdit, à température ambiante, de laisser la pression relative dans le réservoir d'hydrogène descendre sous le seuil minimum des 2 bar ceci afin d'éviter le phénomène d'hydrogène « buckling » observé dans les réservoirs de type IV. Toutefois, certains constructeurs automobiles ont décidé d'être plus restrictifs que le règlement (UE) N° 406/2010 en plaçant le seuil de pression minimum à 20 bar plutôt qu'à 2 bar. En pratique, à température ambiante, dès que la pression relative dans le réservoir d'hydrogène descend sous le seuil des 20 bar, une sécurité se déclenche et arrête le véhicule. La masse d'hydrogène dans un réservoir de 120 litres d'hydrogène gazeux comprimé à 20 bar est de 198 g. Cette quantité d'hydrogène ne faisant pas partie de la réserve du réservoir d'hydrogène, il est important d'avoir une mesure précise de la pression quand la réserve du réservoir d'hydrogène est atteinte, ceci afin d'éviter de déclencher trop tôt l'arrêt de sécurité du véhicule.

On comprend que l'autonomie affichée par la jauge ainsi que l'allumage ou pas du témoin lumineux dépendent à chaque instant de la précision du capteur de pression. Ainsi, pour un capteur de pression ayant une précision de ± 2 % de la pleine échelle (PE), c'est-à-dire de l'étendue de mesure à température ambiante, la précision du capteur peut conduire à une erreur de mesure de ± 18 bar pour un réservoir d'hydrogène gazeux comprimé à 700 bar. En effet, un réservoir d'hydrogène gazeux dont la pression nominale de fonctionnement est de 700 bar à température ambiante est conçu pour supporter une pression de remplissage de 875 bar à 85°C, par conséquent, le capteur de pression associé est aussi conçu pour fournir des relevés de mesure de pression à 875 bar à 85°C. Typiquement, pour mesurer une pression de 875 bar, on utilise un capteur de pression capable de fournir des relevés sur une plage de mesure pleine échelle s'échelonnant entre environ 0,1 MPa (1 bar) et 90 MPa (900 bar), à des températures comprises entre -40°C et 85°C, avec une précision de ± 2 % PE. L'erreur de mesure d'un tel capteur de pression est donc de ± 18 bar. Dans le cas d'un réservoir d'hydrogène gazeux comprimé à 700 bar, une erreur de mesure de ± 18 bar peut conduire au déclenchement de l'arrêt de sécurité du véhicule quand la pression réelle dans le circuit d'alimentation en hydrogène gazeux est de 38 bar au lieu de 20 bar, ceci n'est pas satisfaisant.

Certes, il existe des capteurs de pression de haute précision, capables de fournir des relevés sur une plage de mesure pleine échelle s'échelonnant entre environ 0,1 MPa (1 bar) et 90 MPa (900 bar), à des températures comprises entre -40°C et 85°C, avec une précision allant jusqu'à ± 0,5 % PE. L'inconvénient de tels capteurs est leur prix élevé.

Une solution alternative au capteur de pression de haute précision est proposée par le document GB2462309A qui divulgue un dispositif de mesure de la pression permettant de mesurer la pression sur une large plage de mesure en associant un capteur haute pression à un capteur basse pression. Pour ne pas endommager le capteur basse pression, le dispositif comporte un organe formant soupape, lequel déconnecte fluidiquement le capteur basse pression au-delà d'une pression seuil. L'inconvénient de ce dispositif est que la soupape est commandée par la pression elle-même, ce qui n'est pas souhaitable. En effet, si on veut, par exemple, tester le bon fonctionnement de la soupape, il faut mettre le dispositif sous pression.

Le document US2010193045A1 divulgue un circuit d'alimentation en gaz dans lequel sont disposés différents capteurs et électrovannes. Un capteur haute pression est disposé en amont d'un dispositif régulateur de pression et un capteur basse pression est disposé en aval du dispositif régulateur de pression. Le capteur basse pression n'est protégé que lorsque toutes les électrovannes sont fermées, et la fermeture de celles-ci ne permet plus au capteur haute pression de continuer à mesurer la pression.

La présente invention vise à pallier les inconvénients précités en proposant un dispositif de mesure de la pression dans un circuit d'alimentation en gaz comprimé plus précis, sans recourir à des capteurs de pression onéreux ni à des associations de capteurs basse pression et haute pression aux fonctionnalités limitées.

A cet effet, l'invention a pour objet un dispositif de mesure de la pression configuré pour mesurer la pression dans un circuit d'alimentation en gaz comprimé pour véhicule automobile, comprenant un boîtier dans lequel sont agencés au moins en partie :
- un premier capteur de pression apte à mesurer une première pression nominale d'un gaz comprimé entre une première limite inférieure de pression de service et une première limite supérieure de pression de service, le premier capteur de pression étant dimensionné pour résister à une première pression maximale de service,
- un deuxième capteur de pression apte à mesurer une deuxième pression nominale d'un gaz comprimé entre une deuxième limite inférieure de pression de service et une deuxième limite supérieure de pression de service, telle que la deuxième limite supérieure de pression de service est supérieure à la première limite supérieure de pression de service et telle que la deuxième limite inférieure de pression de service est inférieure ou égale à la première limite supérieure de pression de service,
- un moyen de protection du premier capteur de pression comprenant une électrovanne 2-voies normalement fermée à commande directe ou à servocommande comprenant un noyau mobile, une voie d'entrée et une voie de sortie de gaz comprimé, configurée pour alternativement :
- isoler le premier capteur de pression du gaz comprimé quand la pression susceptible de s'exercer sur le premier capteur de pression mesurée par le deuxième capteur de pression est supérieure à la première pression maximale de service du premier capteur de pression, et
- exposer le premier capteur de pression au gaz comprimé quand la pression susceptible de s'exercer sur le premier capteur de pression est inférieure ou égale à la première limite supérieure de pression de service du premier capteur de pression,
ledit boîtier comprenant :
- un premier raccordement d'entrée de gaz configuré pour raccorder de manière étanche ledit dispositif de mesure de pression audit circuit d'alimentation en gaz comprimé et tel que la voie d'entrée de ladite électrovanne est tournée vers ledit premier raccordement d'entrée de gaz,
- un deuxième raccordement d'utilisation configuré pour raccorder de manière étanche ledit premier capteur de pression audit dispositif de mesure de pression et tel que la voie de sortie de ladite électrovanne est tournée vers ledit deuxième raccordement d'utilisation,
- un troisième raccordement d'utilisation configuré pour raccorder de manière étanche ledit deuxième capteur de pression audit dispositif de mesure de pression,
- un premier canal de communication entre ledit premier raccordement d'entrée de gaz et ledit deuxième raccordement d'utilisation,
- un deuxième canal de communication entre ledit premier raccordement d'entrée de gaz et ledit troisième raccordement d'utilisation, et
- un moyen d'obturation réversible dudit premier canal de communication comprenant ledit noyau mobile de ladite électrovanne, ledit noyau étant mobile entre une position d'obturation dudit premier canal de communication où ledit premier capteur de pression est isolé dudit gaz comprimé et une position d'ouverture dudit premier canal de communication où ledit premier capteur de pression est exposé audit gaz comprimé.

L'invention permet d'introduire dans un circuit d'alimentation en gaz comprimé un premier capteur de pression caractérisé par une pression maximale de service inférieure à la pression susceptible de régner dans le circuit d'alimentation, sans risquer d'endommager le capteur de pression. L'association du premier et du deuxième capteur de pression permet de réduire le coût du dispositif de mesure de la pression dans un circuit d'alimentation en gaz comprimé en remplaçant un capteur de pression de haute précision par deux capteurs de pression de moindre précision, tout en améliorant la précision de la mesure de la pression de réserve. En effet, dans le cas d'un réservoir d'hydrogène gazeux dont la pression de réserve est 100 bar, l'erreur de mesure de la pression de réserve est ± 2 bar, à température ambiante, avec un capteur de pression ayant une précision de ± 2 % PE et une plage de mesure s'échelonnant entre 1 et 100 bar. Pour obtenir la même erreur de mesure avec un capteur de pression ayant une plage de mesure s'échelonnant entre 1 et 900 bar, il faudrait que la précision de ce capteur de pression soit de ± 0,22 % PE. Le boîtier permet de regrouper les éléments du dispositif de mesure dans un seul composant afin de mesurer de manière précise la pression de réserve dans le circuit d'alimentation en gaz comprimé. L'électrovanne comme moyen de protection du premier capteur de pression permet de mieux contrôler l'obturation du premier canal de communication grâce à un asservissement électrique, le fait que l'électrovanne soit à 2-voies normalement fermée à commande directe ou à servocommande permet de protéger le premier capteur de pression quand l'électrovanne est au repos ou hors tension. Le noyau mobile comme moyen d'obturation réversible permet de réduire le nombre d'éléments constituant le dispositif de mesure et, grâce à son asservissement électrique, permet de tester son bon fonctionnement sans nécessité de mettre le dispositif sous pression.

Grâce à l'invention, le témoin lumineux ne s'allume ni trop tôt ni trop tard, ceci sans utiliser de capteur de pression de haute précision. De plus, l'arrêt de sécurité du véhicule ne risque pas de se déclencher trop tôt. En effet, le premier capteur de pression selon l'invention est un capteur apte à mesurer la pression de réserve du réservoir d'hydrogène. La pression de réserve du réservoir d'hydrogène est la pression qui règne dans le circuit d'alimentation quand la réserve du réservoir d'hydrogène est atteinte. Par exemple, la pression exercée par une réserve de 740 g d'hydrogène gazeux dans un réservoir de 120 litres est de 100 bar, à température ambiante. La pression de réserve tient compte de la présence de 198 g d'hydrogène dans le réservoir afin de respecter le règlement (UE) N° 406/2010. Autrement dit, 100 bar est la pression exercée par 198 + 740 = 938 g d'hydrogène gazeux dans un réservoir de 120 litres, à température ambiante. Pour un capteur de pression ayant une précision de ± 2 % PE et une plage de mesure s'échelonnant entre 1 et 100 bar, la précision du capteur peut conduire à une erreur de mesure de ± 2 bar pour un réservoir d'hydrogène gazeux comprimé à 100 bar, à température ambiante. Dans le cas d'un réservoir de 120 litres d'hydrogène gazeux comprimé à 100 bar, une erreur de mesure de ± 2 bar amène à sous-estimer ou à surestimer l'autonomie restante de 1,7 km quand la réserve du réservoir d'hydrogène est atteinte, ce qui se traduit par l'allumage du témoin lumineux ni trop tôt ni trop tard, et par l'arrêt de sécurité du véhicule ni trop tôt ni trop tard, ce qui est très satisfaisant.

Suivant d'autres caractéristiques optionnelles de l'invention, prises seules ou en combinaison :
- Le moyen d'obturation réversible est agencé, au moins en partie, dans le premier canal de communication.
- L'activation du moyen d'obturation est un déplacement linéaire du noyau mobile. Ceci permet de simplifier la construction du moyen d'obturation, en particulier, l'étanchéité du moyen d'obturation.
- Le dispositif de mesure de la pression comprend une interface électrique commune aux premier et deuxième capteurs de pression. Ceci permet de réduire le nombre de composants nécessaires pour connecter les premier et deuxième capteurs de pression.
- l'interface électrique commune est agencée au moins en partie dans le boîtier.
- ledit deuxième capteur de pression est donné avec une erreur de mesure et ledit moyen de protection est configuré pour exposer ledit premier capteur de pression audit gaz comprimé quand la pression susceptible de s'exercer sur ledit premier capteur de pression mesurée par le deuxième capteur de pression est inférieure ou égale à la première pression maximale de service dudit premier capteur de pression réduite de la valeur absolue de l'erreur de mesure du deuxième capteur de pression. Ceci permet de rester dans le domaine élastique du premier capteur de pression, on évite ainsi de l'endommager. Préférentiellement, ledit moyen de protection est configuré pour exposer ledit premier capteur de pression audit gaz comprimé quand la pression susceptible de s'exercer sur ledit premier capteur de pression mesurée par le deuxième capteur de pression est inférieure ou égale à la première limite supérieure de pression de service dudit premier capteur de pression augmentée de la valeur absolue de l'erreur de mesure du deuxième capteur de pression. Ceci permet de rester dans le domaine élastique du premier capteur de pression en s'approchant au plus près de la première limite supérieure de pression de service. Encore plus préférentiellement, ledit moyen de protection est configuré pour exposer ledit premier capteur de pression audit gaz comprimé quand la pression susceptible de s'exercer sur ledit premier capteur de pression mesurée par le deuxième capteur de pression est inférieure ou égale à la première limite supérieure de pression de service dudit premier capteur de pression réduite de la valeur absolue de l'erreur de mesure du deuxième capteur de pression. Ceci permet une mesure fiable de la pression dès l'ouverture de l'électrovanne en exposant le premier capteur de pression seulement quand on est sûr que la pression mesurée par le deuxième capteur de pression est dans la plage de mesure du premier capteur de pression.
- ledit moyen de protection est configuré pour isoler ledit premier capteur de pression dudit gaz comprimé quand la pression susceptible de s'exercer sur ledit premier capteur de pression mesurée par le deuxième capteur de pression est supérieure à la première pression maximale de service dudit premier capteur de pression réduite de la valeur absolue de l'erreur de mesure du deuxième capteur de pression. Ceci permet d'éviter d'endommager le premier capteur de pression tout en permettant à ce dernier de fournir des relevés fiables de mesure de pression (ce sont les relevés dans la plage de mesure du premier capteur de pression) et des relevés moins fiables (ce sont les relevés dans la plage entre la première limite supérieure de pression de service et la première pression maximale de service du premier capteur de pression). Préférentiellement, quand la pression susceptible de s'exercer sur ledit premier capteur de pression mesurée par le deuxième capteur de pression est supérieure à la première limite supérieure de pression de service dudit premier capteur de pression augmentée de la valeur absolue de l'erreur de mesure du deuxième capteur de pression. Ceci permet d'éviter d'endommager le premier capteur de pression tout en permettant à ce dernier de fournir uniquement des relevés fiables de mesure de pression.
- la première limite supérieure de pression de service est inférieure ou égale à 15 % de la deuxième limite supérieure de pression de service, de préférence, inférieure ou égale à 10 %, et mieux de préférence, inférieure ou égale à 5 %. Ceci permet d'affiner la précision des relevés à basse pression.
- ladite électrovanne comprend un corps issu, au moins en partie, de matière du boîtier. Ceci permet de fabriquer un dispositif de mesure compact et à moindre coût.
- Le premier capteur et/ou le deuxième capteur de pression est un capteur de pression à diaphragme, aussi appelé membrane. Ceci permet de construire un capteur de pression robuste et précis en fonction de la déformation de la membrane.
- Le premier capteur de pression est un capteur basse pression statique, par exemple, un capteur de pression relative ayant une précision de ± 2 % PE et une plage de mesure s'échelonnant, par exemple, entre 1 et 100 bar. Ceci permet de mesurer de manière précise la pression de réserve dans un circuit d'alimentation en gaz comprimé, sans recourir à un capteur de pression de haute précision.
- Le deuxième capteur de pression est un capteur haute pression statique, par exemple, un capteur de pression relative ayant une précision de ± 2 % PE et une plage de mesure s'échelonnant, par exemple, entre 1 et 900 bar. Ceci permet de mesurer de manière suffisamment précise la pression dans un circuit d'alimentation en gaz comprimé quand la réserve du réservoir d'hydrogène n'est pas atteinte.
- Le gaz comprimé est de l'hydrogène gazeux comprimé ou du gaz naturel comprimé. Ceci permet d'utiliser le dispositif de mesure de la pression selon l'invention dans des véhicules automobiles fonctionnant à l'hydrogène gazeux comprimé ou au gaz naturel comprimé.

L'invention a encore pour objet un circuit d'alimentation en gaz comprimé pour véhicule automobile comprenant :
- un dispositif de mesure de la pression selon l'invention,
- au moins un réservoir de stockage d'un gaz comprimé,
- au moins une vanne d'alimentation raccordée de manière étanche au au moins un réservoir de stockage d'un gaz comprimé,
- au moins un tuyau de raccordement raccordé de manière étanche à la au moins une vanne d'alimentation, configuré pour transférer du gaz comprimé du au moins un réservoir vers un dispositif de consommation de gaz comprimé,
- le dispositif de mesure de la pression est raccordé de manière étanche à la au moins une vanne d'alimentation ou au au moins un tuyau de raccordement.

Ceci permet d'utiliser le dispositif de mesure de la pression selon l'invention dans un circuit d'alimentation en gaz comprimé pour véhicule automobile fonctionnant au gaz comprimé, par exemple, fonctionnant à l'hydrogène gazeux comprimé ou au gaz naturel comprimé.

Suivant d'autres caractéristiques optionnelles du circuit d'alimentation selon l'invention, prises seules ou en combinaison, le circuit d'alimentation comprend :
- deux réservoirs de stockage d'un gaz comprimé,
- deux vannes d'alimentation, chacune raccordée de manière étanche à un réservoir de stockage d'un gaz comprimé,
- deux tuyaux de raccordement, chacun raccordé de manière étanche à une vanne d'alimentation et configuré pour transférer du gaz comprimé d'un réservoir vers un dispositif de consommation de gaz comprimé.

Ceci permet de diviser le volume de stockage du gaz comprimé afin de mieux le répartir dans le véhicule automobile.
- Le circuit d'alimentation comprend une unité de contrôle électronique configurée pour recevoir des relevés de mesure de pression dudit deuxième capteur de pression et commander la mise sous tension de ladite électrovanne dès que lesdits relevés de mesure de pression dudit deuxième capteur de pression sont inférieurs ou égaux à la première pression maximale de service ou inférieurs ou égaux à la première limite supérieure de pression de service du premier capteur de pression.

L'invention a également pour objet un circuit d'alimentation en gaz comprimé pour véhicule automobile comprenant :
- un dispositif de mesure de la pression, comprenant un capteur primaire formé d'un premier capteur de pression apte à mesurer une première pression nominale d'un gaz comprimé entre une première limite inférieure de pression de service et une première limite supérieure de pression de service, ledit premier capteur de pression étant dimensionné pour résister à une première pression maximale de service,
- au moins un réservoir de stockage d'un gaz comprimé,
- au moins une vanne d'alimentation raccordée de manière étanche audit au moins un réservoir de stockage d'un gaz comprimé,
- au moins un tuyau de raccordement raccordé de manière étanche à ladite au moins une vanne d'alimentation, configuré pour transférer du gaz comprimé dudit au moins un réservoir vers un dispositif de consommation de gaz comprimé,
- un capteur secondaire formé
   - d'un deuxième capteur de pression, supporté par le dispositif de mesure de la pression, apte à mesurer une deuxième pression nominale d'un gaz comprimé entre une deuxième limite inférieure de pression de service et une deuxième limite supérieure de pression de service, telle que la deuxième limite supérieure de pression de service est supérieure à la première limite supérieure de pression de service et telle que la deuxième limite inférieure de pression de service est inférieure ou égale à la première limite supérieure de pression de service, et/ou
   - d'un troisième capteur de pression, séparé du dispositif de mesure de la pression, apte à mesurer une troisième pression nominale d'un gaz comprimé entre une troisième limite inférieure de pression de service et une troisième limite supérieure de pression de service, telle que la troisième limite supérieure de pression de service est supérieure à la première limite supérieure de pression de service telle que la troisième limite inférieure de pression de service est inférieure ou égale à la première limite supérieure de pression de service,
- une unité de contrôle électronique,
   ladite unité de contrôle électronique est configurée pour recevoir des relevés de mesure de pression du capteur de pression secondaire et les comparer avec la première pression maximale de service du premier capteur de pression,
   ledit dispositif de mesure de la pression est raccordé de manière étanche à ladite au moins une vanne d'alimentation, ou audit au moins un tuyau de raccordement, et comprend :
- un moyen de protection dudit premier capteur de pression, configuré pour alternativement :
   - isoler ledit premier capteur de pression dudit gaz comprimé présent dans ladite au moins une vanne d'alimentation et ledit au moins un tuyau de raccordement au moins quand la pression susceptible de s'exercer sur ledit premier capteur de pression mesurée par le capteur secondaire est supérieure à la première pression maximale de service dudit premier capteur de pression, et
   - exposer ledit premier capteur de pression audit gaz comprimé, sur commande de l'unité de contrôle électronique en fonction des relevés de mesure du capteur secondaire, quand la pression relevée par le capteur secondaire susceptible de s'exercer sur ledit premier capteur de pression est inférieure ou égale à la première limite supérieure de pression de service dudit premier capteur de pression.

Ceci permet de mesurer la pression qui règne dans le circuit d'alimentation, en particulier, quand celle-ci est supérieure à la pression de réserve.

L'invention a en outre pour objet un procédé de mesure de la pression dans un circuit d'alimentation en gaz comprimé comprenant les étapes suivantes :
- fournir le premier capteur de pression dans le circuit d'alimentation en gaz comprimé,
- isoler le premier capteur de pression du gaz comprimé présent dans le circuit d'alimentation quand la pression dans le circuit d'alimentation est supérieure à la première pression maximale de service du premier capteur de pression,
- exposer le premier capteur de pression au gaz comprimé présent dans le circuit d'alimentation quand la pression dans le circuit d'alimentation est inférieure ou égale à la première limite supérieure de pression de service du premier capteur de pression,
- effectuer des premiers relevés de mesure de pression avec le premier capteur de pression quand le premier capteur de pression est exposé au gaz comprimé présent dans le circuit d'alimentation.

Ceci permet de mesurer avec précision la pression de réserve dans un circuit d'alimentation en gaz comprimé en utilisant un capteur de pression caractérisé par une pression maximale de service inférieure à la pression susceptible de régner dans le circuit d'alimentation, sans risquer d'endommager le capteur de pression.

Suivant une autre caractéristique optionnelle de l'invention, le procédé de mesure de la pression comprend les étapes suivantes :
- fournir le deuxième capteur de pression dans le circuit d'alimentation en gaz comprimé,
- exposer le deuxième capteur de pression au gaz comprimé présent dans le circuit d'alimentation quand la pression dans le circuit d'alimentation est supérieure à la première limite supérieure de pression de service du premier capteur de pression
- effectuer des seconds relevés de mesure de pression avec le deuxième capteur de pression quand le deuxième capteur de pression est exposé au gaz comprimé présent dans le circuit d'alimentation.

Ceci permet de mesurer de manière suffisamment précise la pression qui règne dans le circuit d'alimentation quand cette pression est supérieure à la pression de réserve.

L'invention a enfin pour objet un procédé de contrôle de plausibilité du fonctionnement d'un dispositif de mesure de la pression dans un circuit d'alimentation en gaz comprimé pour véhicule automobile, comprenant les étapes suivantes :
- fournir le premier capteur de pression dans le circuit d'alimentation en gaz comprimé,
- fournir le deuxième capteur de pression dans le circuit d'alimentation en gaz comprimé,
- exposer le premier capteur de pression au gaz comprimé présent dans le circuit d'alimentation quand la pression dans le circuit d'alimentation est inférieure ou égale à la première limite supérieure de pression de service du premier capteur de pression,
- exposer le deuxième capteur de pression au gaz comprimé présent dans le circuit d'alimentation quand la pression dans le circuit d'alimentation est inférieure ou égale à la première limite supérieure de pression de service du premier capteur de pression,
- effectuer des premiers relevés de mesure de pression avec le premier capteur de pression,
- effectuer des seconds relevés de mesure de pression avec le deuxième capteur de pression,
- exécuter un algorithme de contrôle de plausibilité des premiers relevés et des seconds relevés pour détecter un défaut de fonctionnement du premier et/ou du deuxième capteur de pression.

Ceci permet de vérifier le bon ou le mauvais fonctionnement du premier et/ou du deuxième capteur de pression.

### Brève description des figures

Les différents objets de l'invention seront mieux compris à la lecture de la description qui suit donnée uniquement à titre d'exemple et faite en se référant aux figures annexées sur lesquelles les mêmes numéros de référence désignent partout des éléments présentant des fonctions identiques, analogues ou similaires, et dans lesquelles :
[Fig. 1] la figure 1 est un graphique montrant l'évolution du signal de sortie d'un capteur de pression en fonction de la pression ;
[Fig. 2] la figure 2 est une vue en coupe longitudinale schématique partielle d'un dispositif de mesure de la pression selon un premier mode de réalisation de l'invention, dans une première configuration ;
[Fig. 3] la figure 3 est une vue en coupe longitudinale schématique partielle d'un dispositif de mesure de la pression selon le premier mode de réalisation de l'invention, dans une deuxième configuration ;
[Fig. 4] la figure 4 est une vue en coupe longitudinale schématique partielle d'un dispositif de mesure de la pression selon un deuxième mode de réalisation de l'invention, dans une première configuration ;
[Fig. 5] la figure 5 est une vue en coupe longitudinale schématique partielle d'un dispositif de mesure de la pression selon le deuxième mode de réalisation de l'invention, dans une deuxième configuration ;
[Fig. 6] la figure 6 est une vue en coupe longitudinale schématique partielle d'un circuit d'alimentation en gaz comprimé pour véhicule automobile selon un premier mode de réalisation de l'invention, dans une première configuration ;
[Fig. 7] la figure 7 est une vue en coupe longitudinale schématique partielle d'un circuit d'alimentation en gaz comprimé pour véhicule automobile selon le premier mode de réalisation de l'invention, dans une deuxième configuration ;
[Fig. 8] la figure 8 est une vue en coupe longitudinale schématique partielle d'un circuit d'alimentation en gaz comprimé pour véhicule automobile selon un deuxième mode de réalisation de l'invention, dans une première configuration ;
[Fig. 9] la figure 9 est une vue en coupe longitudinale schématique partielle d'un circuit d'alimentation en gaz comprimé pour véhicule automobile selon le deuxième mode de réalisation de l'invention, dans une deuxième configuration ;
[Fig. 10] la figure 10 est une vue en coupe longitudinale schématique partielle d'un circuit d'alimentation en gaz comprimé pour véhicule automobile selon un troisième mode de réalisation de l'invention, dans une première configuration ;
[Fig. 11] la figure 11 est une vue en coupe longitudinale schématique partielle d'un circuit d'alimentation en gaz comprimé pour véhicule automobile selon le troisième mode de réalisation de l'invention, dans une deuxième configuration ;
[Fig. 12] la figure 12 est une vue en coupe longitudinale schématique partielle d'un circuit d'alimentation en gaz comprimé pour véhicule automobile selon un quatrième mode de réalisation de l'invention, dans une première configuration ;
[Fig. 13] la figure 13 est une vue en coupe longitudinale schématique partielle d'un circuit d'alimentation en gaz comprimé pour véhicule automobile selon le quatrième mode de réalisation de l'invention, dans une deuxième configuration ;
[Fig. 14] la figure 14 est un diagramme partiel illustrant un procédé de contrôle de plausibilité selon l'invention ;
[Fig. 15] la figure 15 est un graphique montrant l'évolution du signal de sortie d'un premier et d'un deuxième capteur de pression en fonction de la pression.

### Description détaillée

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

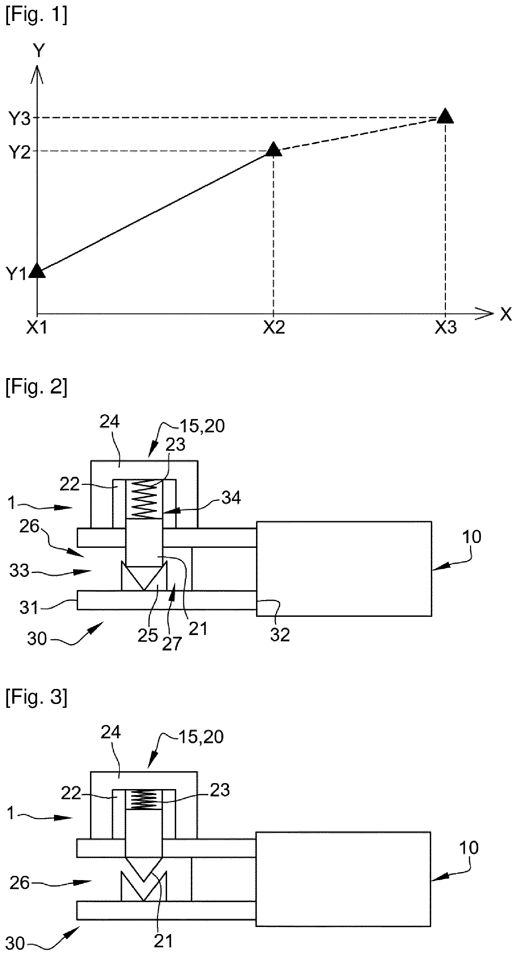

La figure 1 illustre par un graphique l'évolution de la tension électrique à la sortie d'un capteur de pression « actif », en fonction de la pression subie par le capteur, à température ambiante. La tension électrique est portée sur l'axe des ordonnées Y et la pression est portée sur l'axe des abscisses X.

Un capteur de pression « actif », tels que ceux utilisés dans les circuits d'alimentation en gaz comprimé, comprend un corps d'épreuve constitué typiquement d'un diaphragme, aussi appelé membrane. Un tel capteur de pression comprend des composants électroniques configurés pour produire une tension électrique de sortie (le signal de sortie) proportionnelle à la différence de pression subie par le diaphragme. Ainsi, lorsque la pression subie par le capteur de pression passe d'une valeur X1 à une valeur X2, où X1 est la limite inférieure de pression de service et X2 est la limite supérieure de pression de service, la tension de sortie du capteur de pression passe d'une valeur Y1 à une valeur Y2. La plage s'étendant de X1 à X2 est la plage de mesure de la pression nominale. La différence algébrique X2-X1 représente l'étendue de la mesure. Dans la plage de mesure, la déformation du diaphragme est élastique et la tension de sortie est proportionnelle à la déformation du diaphragme.

Lorsque la pression subie par le capteur de pression passe de la valeur X2 à une valeur X3, où X3 est la pression maximale de service, la tension de sortie du capteur de pression passe de la valeur Y2 à une valeur Y3. Dans la plage s'étendant de X2 à X3, le capteur de pression fonctionne encore car la déformation du diaphragme est toujours élastique mais la tension de sortie n'est plus proportionnelle à la déformation du diaphragme, autrement dit, la valeur X3 n'est plus représentative de la pression subie par le capteur de pression.

Lorsque la pression subie par le capteur de pression est supérieure à la valeur X3, le capteur de pression garde des dommages permanents. En effet, au-dessus de la pression maximale de service, la déformation du diaphragme n'est plus élastique mais plastique, le capteur de pression ne fonctionne plus.

Avantageusement, le diaphragme selon l'invention est une pièce métallique circulaire. Dans un exemple, le diaphragme est en acier inoxydable, de préférence, en inox 310 ou 316 car ces alliages sont peu fragilisés dans l'hydrogène. Avantageusement, le diaphragme est revêtu d'une couche électriquement conductrice telle qu'une couche d'aluminium, de cuivre ou de laiton afin d'améliorer le signal de sortie.

La figure 2 illustre un premier mode de réalisation d'un dispositif de mesure de la pression selon l'invention. Dans ce mode de réalisation, un dispositif de mesure de la pression 1 dans un circuit d'alimentation en gaz comprimé pour véhicule automobile comprend un capteur primaire formé d'un premier capteur de pression 10 apte à mesurer une première pression nominale P1 d'un gaz comprimé entre une première limite inférieure de pression de service P1_{inf}, par exemple 1 bar, et une première limite supérieure de pression de service P1ₛᵤₚ, par exemple 100 bar. Le premier capteur de pression 10 est dimensionné pour résister à une première pression maximale de service P1ₘₐₓ, par exemple 150 bar. Le dispositif 1 comprend également une électrovanne 20 formant un moyen de protection 15 du premier capteur de pression 10. L'électrovanne 20 est, par exemple, une électrovanne 2-voies normalement fermée comprenant une voie d'entrée 26 et une voie de sortie 27 de gaz comprimé. L'électrovanne 20 est configurée pour, alternativement, isoler le premier capteur de pression 10 du gaz comprimé, ceci afin de protéger le premier capteur 10 de la détérioration, voire de la destruction, quand la pression susceptible de s'exercer sur le premier capteur de pression 10 est supérieure à la première pression maximale de service P1ₘₐₓ du premier capteur de pression 10, et exposer le premier capteur de pression 10 au gaz comprimé, quand la pression susceptible de s'exercer sur le premier capteur de pression 10 est inférieure ou égale à la première limite supérieure de pression de service P1ₛᵤₚ du premier capteur de pression 10, ceci afin de permettre au premier capteur de pression 10 de mesurer la première pression nominale P1.

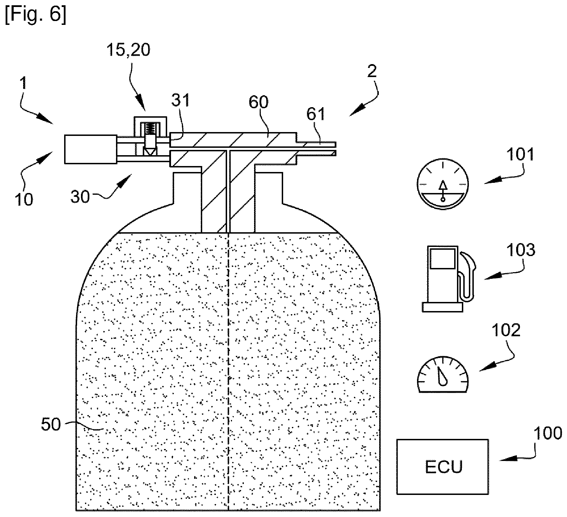

Le dispositif de mesure de la pression 1 comprend aussi un boîtier 30 dans lequel sont agencés au moins en partie l'électrovanne 20 et au moins en partie le premier capteur de pression 10. Le boîtier 30 comprend un premier raccordement d'entrée de gaz 31 configuré pour raccorder de manière étanche le dispositif de mesure de pression 1 au circuit d'alimentation en gaz comprimé 2 (voir figure 6), un deuxième raccordement d'utilisation 32 configuré pour raccorder de manière étanche le premier capteur de pression 10 au dispositif de mesure de pression 1, un premier canal de communication 33 entre le premier raccordement d'entrée de gaz 31 et le deuxième raccordement d'utilisation 32, et un moyen d'obturation réversible 34 du premier canal de communication 33. Par « réversible », on entend désigner le fait que le moyen d'obturation 34 est mobile entre une position d'obturation du premier canal de communication 33 et une position d'ouverture du premier canal de communication 33, et vis-versa. Avantageusement, le moyen d'obturation 34 est activable par l'électrovanne 20, c'est-à-dire que le moyen d'obturation 34 est capable d'être mis en mouvement par l'électrovanne 20 pour passer alternativement de la position d'obturation où le premier capteur de pression 10 est isolé du gaz comprimé à la position d'ouverture où le premier capteur de pression 10 est exposé au gaz comprimé. De préférence, le premier raccordement d'entrée de gaz 31 a la forme d'une vis et comprend un joint, par exemple, torique (non représenté). Ceci permet de connecter de manière étanche et amovible le dispositif de mesure de pression 1 au circuit d'alimentation en gaz comprimé 2. De préférence, le deuxième raccordement d'utilisation 32 a la forme d'une vis et comprend un joint, par exemple, torique (non représenté). Ceci permet de connecter de manière étanche et amovible le premier capteur de pression 10 au dispositif de mesure de pression 1.

La voie d'entrée 26 de gaz comprimé de l'électrovanne 20 est tournée vers le premier raccordement d'entrée de gaz 31 du boîtier 30 pour accueillir le gaz comprimé provenant du circuit d'alimentation 2. La voie de sortie 27 de gaz comprimé de l'électrovanne 20 est tournée vers le deuxième raccordement d'utilisation 32 du boîtier 30 pour délivrer le gaz comprimé présent dans la voie d'entrée 26 au premier capteur de pression 10.

L'électrovanne 20 est une électrovanne à solénoïde qui comprend un noyau mobile 21, une bobine de fil électrique 22 et un ressort de rappel 23, le tout étant logé dans un corps 24 de l'électrovanne 20. De préférence, le noyau mobile 21 est une pièce cylindrique qui comprend au moins une partie en matériau ferreux, par exemple du fer. Le moyen d'obturation réversible 34 du premier canal de communication 33 comprend le noyau mobile 21 de l'électrovanne 20. Le noyau mobile 21 est mobile entre la position d'obturation et la position d'ouverture du premier canal de communication 33. L'activation du moyen d'obturation 34 est un déplacement linéaire du noyau mobile 21 provoqué par la mise sous tension électrique du solénoïde. Dans la configuration de la figure 2, l'électrovanne 20 est en position fermée. S'agissant d'une électrovanne 2-voies normalement fermée, la position fermée est la position de l'électrovanne au repos, c'est-à-dire, hors tension. Dans cette position, le noyau mobile 21 est sorti sous l'action du ressort de rappel 23. Un siège 25 de réception du noyau mobile 21 est agencé dans le premier canal de communication 33. L'extrémité libre du noyau mobile 21 a une forme conique en coopération de forme avec une contre-forme conique du siège 25 pour obturer le premier canal de communication 33. Par cette disposition, le premier capteur de pression 10 est isolé du gaz comprimé quand la pression susceptible de s'exercer sur le premier capteur de pression 10 est supérieure à la première pression maximale de service P1ₘₐₓ du premier capteur de pression 10.

Le noyau mobile 21 peut également comprendre une partie en matériau thermoplastique, par exemple du polyétheréthercétone (PEEK), à l'extrémité libre du noyau mobile 21. Dans ce cas, le siège 25 comprend également une partie en matériau thermoplastique, par exemple la contre-forme conique, pour faire une étanchéité plastique / plastique. Un joint d'étanchéité (non représenté) peut être placé entre l'extrémité libre du noyau mobile et le siège 25 pour améliorer l'obturation du premier canal de communication 33.

Avantageusement, l'activation du moyen d'obturation 34 de l'électrovanne 20 dépend des relevés de mesure d'un capteur secondaire de pression 101 (voir figure 6).

La figure 3 illustre une autre configuration du dispositif de mesure de la figure 2. Dans cette autre configuration, l'électrovanne 20 est en position ouverte. S'agissant d'une électrovanne 2-voies normalement fermée, la position ouverte est la position de l'électrovanne au travail, c'est-à-dire, sous tension. Dans cette position, le noyau mobile 21 est rétracté dans le corps 24 sous l'action d'un champ électromagnétique créé par la circulation d'un courant électrique dans la bobine de fil électrique 22. En se rétractant, le noyau mobile 21 comprime le ressort de rappel 23. Tant que le courant est maintenu dans la bobine 22, le noyau mobile 21 est gardé à l'intérieur du corps 24 par la force d'attraction des champs magnétiques. Par cette disposition, le premier capteur de pression 10 est exposé au gaz comprimé quand la pression susceptible de s'exercer sur le premier capteur de pression 10 est inférieure ou égale à la première limite supérieure de pression de service P1ₛᵤₚ du premier capteur de pression 10.

Lorsque le courant cesse, les champs magnétiques disparaissent et la force emmagasinée dans le ressort 23 se libère et pousse le noyau mobile 21, l'électrovanne 20 revient au repos.

Avantageusement, l'électrovanne 20 est une électrovanne à commande directe ou à servocommande.

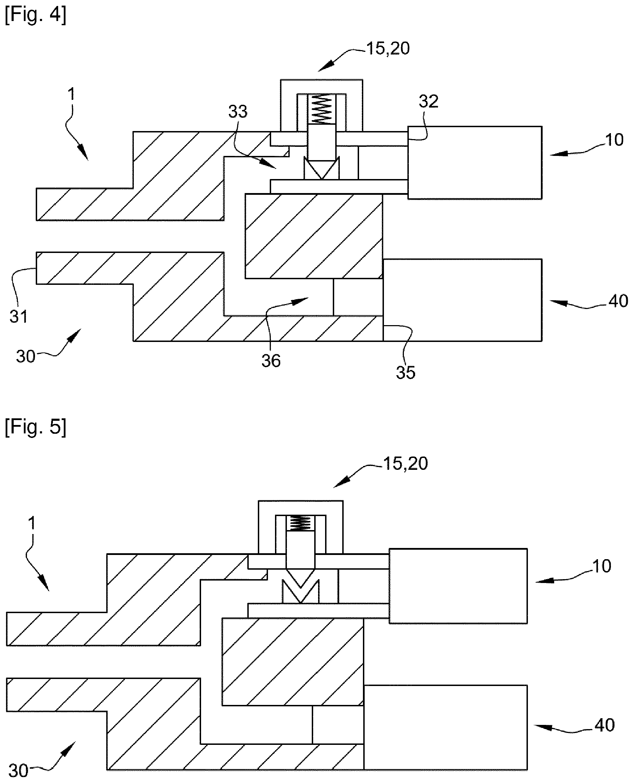

La figure 4 illustre un deuxième mode de réalisation d'un dispositif de mesure de la pression selon l'invention. Dans cette variante de réalisation, le dispositif de mesure de la pression 1 comprend un capteur secondaire formé d'un deuxième capteur de pression 40 apte à mesurer une deuxième pression nominale P2 d'un gaz comprimé entre une deuxième limite inférieure de pression de service P2_{inf} et une deuxième limite supérieure de pression de service P2ₛᵤₚ. Le deuxième capteur de pression 40 est dimensionné pour résister à une deuxième pression maximale de service P2ₘₐₓ supérieure à la première pression maximale de service P1ₘₐₓ, par exemple 1050 bar. Le deuxième capteur de pression 40 est agencé au moins en partie dans le boîtier 30. Le boîtier comprend un troisième raccordement d'utilisation 35 configuré pour raccorder de manière étanche le deuxième capteur de pression 40 au dispositif de mesure de la pression 1. Le boîtier comprend également un deuxième canal de communication 36 entre le premier raccordement d'entrée de gaz 31 et le troisième raccordement d'utilisation 35. Aucun moyen d'obturation n'est présent dans le deuxième canal de communication 36, de sorte que la pression susceptible de s'exercer sur le deuxième capteur de pression 40 s'exerce sans entrave. De préférence, à l'instar du deuxième raccordement d'utilisation 32, le troisième raccordement d'utilisation 35 a la forme d'une vis et comprend un joint, par exemple, torique (non représenté). Ceci permet de connecter de manière étanche et amovible le deuxième capteur de pression 40 au dispositif de mesure de pression 1.

Le rôle du premier capteur de pression 10 est de fournir des relevés de mesure de la pression nominale sur une première plage de mesure entre une première limite inférieure de pression de service P1_{inf} et une première limite supérieure de pression de service P1ₛᵤₚ. Le rôle du deuxième capteur de pression 40 est de fournir des relevés de mesure de la pression nominale sur une deuxième plage de mesure s'étendant au-delà de la première limite supérieure de pression de service P1ₛᵤₚ du premier capteur de pression 10. A cette fin, la deuxième limite supérieure de pression de service P2ₛᵤₚ est supérieure à la première limite supérieure de pression de service P1ₛᵤₚ et la deuxième limite inférieure de pression de service P2_{inf} est inférieure ou égale à la première limite supérieure de pression de service P1ₛᵤₚ, de préférence, inférieure ou égale à la première limite inférieure de pression de service P1_{inf}. Ainsi, lorsque le premier capteur de pression 10 n'est pas en mesure de fournir des relevés fiables de mesure de pression ou lorsque le premier capteur de pression 10 est isolé du gaz comprimé (c'est le cas quand la pression susceptible de s'exercer sur le premier capteur de pression 10 mesurée par le deuxième capteur de pression 40 est supérieure à la première pression maximale de service P1ₘₐₓ), le deuxième capteur de pression 40 fournit des relevés de mesure de pression du gaz comprimé. Par exemple, le premier capteur de pression 10 est un capteur ayant une précision de ± 2 % PE et une plage de mesure s'échelonnant entre 1 et 100 bar à température ambiante. Le deuxième capteur de pression 40 est un capteur ayant une précision de ± 2 % PE et une plage de mesure s'échelonnant entre 1 et 700 bar à température ambiante. Dans cette configuration, le premier capteur de pression 10 est appelé « capteur basse-pression » et le deuxième capteur de pression 40 est appelé « capteur haute-pression ». Tant que la pression susceptible de s'exercer sur le capteur basse-pression est supérieure à 100 bar, c'est le capteur haute-pression qui fournit des relevés de mesure de la pression nominale avec une erreur de mesure de ± 18 bar. Dès que la pression susceptible de s'exercer sur le capteur basse-pression mesurée par le capteur haute-pression est inférieure ou égale à 100 bar, le capteur haute-pression et le capteur basse-pression fournissent chacun des relevés de mesure de la pression nominale du gaz comprimé, toutefois, c'est le capteur basse-pression qui fournit la mesure la plus fiable avec une erreur de mesure de ± 2 bar. Par cette disposition, pour un réservoir d'hydrogène gazeux comprimé initialement à 875 bar à 85°C, on arrive à obtenir une erreur de mesure de ± 2 bar quand la pression dans le réservoir descend à 100 bar et en-dessous.

Avantageusement, l'activation du moyen d'obturation 34 de l'électrovanne 20 dépend des relevés de mesure du deuxième capteur de pression 40.

La figure 5 illustre une autre configuration du dispositif de mesure de la figure 4. Dans cette autre configuration, l'électrovanne 20 est en position ouverte.

La figure 6 illustre un premier mode de réalisation d'un circuit d'alimentation en gaz comprimé 2 pour véhicule automobile. Le circuit d'alimentation 2 comprend un dispositif de mesure de la pression 1 tel qu'illustré à la figure 2. Le circuit d'alimentation 2 comprend également une vanne d'alimentation 60 raccordée de manière étanche à un réservoir 50 de stockage d'un gaz comprimé, un tuyau de raccordement 61 raccordé de manière étanche à la vanne d'alimentation 60 et configuré pour transférer du gaz comprimé du réservoir 50 vers un dispositif de consommation de gaz comprimé, par exemple, un moteur électrique connecté à une pile à combustible (non représenté), à travers un détendeur (non représenté). Le dispositif de mesure de la pression 1 est raccordé de manière étanche à la vanne d'alimentation 60. Alternativement, le dispositif de mesure de la pression 1 est raccordé de manière étanche au tuyau de raccordement 61 (non représenté). Afin de mesurer la pression qui règne dans le circuit d'alimentation 2, en particulier, quand la pression dans le circuit d'alimentation 2 est supérieure à la pression de réserve, le circuit d'alimentation 2 comprend un capteur secondaire formé d'un troisième capteur de pression 101 apte à mesurer une troisième pression nominale P3 d'un gaz comprimé entre une troisième limite inférieure de pression de service P3_{inf} et une troisième limite supérieure de pression de service P3ₛᵤₚ. Le troisième capteur de pression 101 est dimensionné pour résister à une troisième pression maximale de service P3ₘₐₓ supérieure à la première pression maximale de service P1ₘₐₓ, par exemple 1050 bar.

Le rôle du troisième capteur de pression 101 est de fournir des relevés de mesure de pression nominale sur une plage de mesure s'étendant au-delà de la première limite supérieure de pression de service P1ₛᵤₚ du premier capteur de pression 10 quand le deuxième capteur de pression 40 est absent. A cette fin, P3ₛᵤₚ est supérieure à P1ₛᵤₚ et P3_{inf} est inférieure ou égale à P1ₛᵤₚ, de préférence, inférieure ou égale à P1_{inf}. Ainsi, lorsque le premier capteur de pression 10 n'est pas en mesure de fournir des relevés fiables de mesure de pression ou lorsque le premier capteur de pression 10 est isolé du gaz comprimé, le troisième capteur de pression 101 fournit des relevés de mesure de pression du gaz comprimé. Par exemple, le premier capteur de pression 10 est un capteur ayant une précision de ± 2 % PE et une plage de mesure s'échelonnant entre 1 et 100 bar à température ambiante. Le troisième capteur de pression 101 est un capteur ayant une précision de ± 2 % PE et une plage de mesure s'échelonnant entre 1 et 700 bar à température ambiante. Dans cette configuration, le premier capteur de pression 10 est appelé « capteur basse-pression » et le troisième capteur de pression 101 est appelé « capteur haute-pression ». Tant que la pression susceptible de s'exercer sur le capteur basse-pression est supérieure à 100 bar, c'est le capteur haute-pression qui fournit des relevés de mesure de la pression nominale avec une erreur de mesure de ± 18 bar. Dès que la pression susceptible de s'exercer sur le capteur basse-pression est inférieure ou égale à 100 bar, le capteur haute-pression et le capteur basse-pression fournissent chacun des relevés de mesure de la pression nominale du gaz comprimé, toutefois, c'est le capteur basse-pression qui fournit la mesure la plus fiable avec une erreur de mesure de ± 2 bar. Par cette disposition, pour un réservoir d'hydrogène gazeux comprimé initialement à 875 bar à 85°C, on arrive à obtenir une erreur de mesure de ± 2 bar quand la pression dans le réservoir descend à 100 bar et en-dessous.

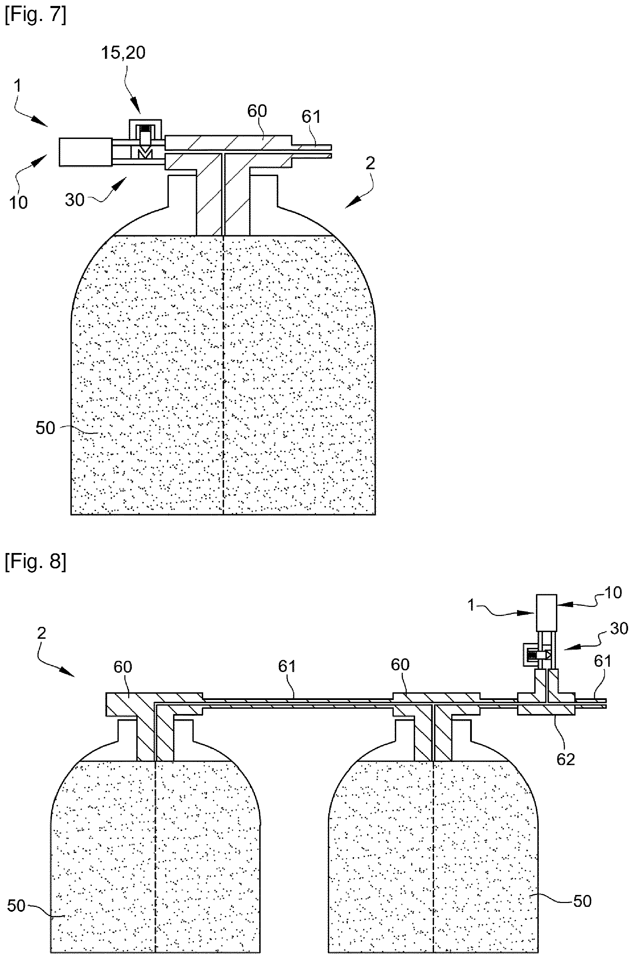

La première limite supérieure de pression de service P1ₛᵤₚ du premier capteur de pression 10 est inférieure ou égale à 15 % de la troisième limite supérieure de pression de service P3ₛᵤₚ, de préférence, P1ₛᵤₚ est inférieure ou égale à 10 % de P3ₛᵤₚ, et mieux de préférence, P1ₛᵤₚ est inférieure ou égale à 5 % de P3ₛᵤₚ. Le troisième capteur de pression 101 est agencé, au moins en partie, dans le circuit d'alimentation 2 sans être agencé dans le dispositif de mesure de la pression 1. Dans un exemple, le gaz comprimé est de l'hydrogène gazeux comprimé à 700 bar, la pression de réserve est 100 bar, le premier capteur de pression 10 est un capteur basse pression dynamique et statique permettant une mesure de pression relative de 1 bar (P1_{inf}) à 100 bar (P1ₛᵤₚ) avec un précision de ± 2 % PE et le troisième capteur de pression 101 est un capteur haute pression dynamique et statique permettant une mesure de pression relative de 1 bar (P3_{inf}) à 900 bar (P3ₛᵤₚ) avec un précision de ± 2 % PE. Une unité 100 de contrôle électronique ECU (« Electronic Control Unit » en langue anglaise) du circuit d'alimentation 2 reçoit des relevés R₃ de mesure de pression du troisième capteur de pression 101 et les compare avec la première pression maximale de service P1ₘₐₓ du premier capteur de pression 10. Tant que les relevés R₃ sont supérieurs à P1ₘₐₓ, l'électrovanne 20 est au repos, le premier canal de communication 33 est obturé. Le conducteur est informé de l'autonomie restante de son véhicule par une jauge 102 et un témoin lumineux 103 sur le tableau de bord du véhicule. L'affichage de l'autonomie par la jauge 102 est mis à jour par l'unité ECU 100 en fonction des relevés R₃ de mesure de pression qu'elle reçoit du troisième capteur de pression 101. De préférence, les relevés R₃ se font en continu afin d'afficher l'autonomie restante en temps réel. Dès que les relevés R₃ de mesure de pression sont inférieurs ou égaux à la première pression maximale de service P1ₘₐₓ ou à la première limite supérieure de pression de service P1ₛᵤₚ du premier capteur de pression 10, l'unité ECU 100 commande la mise sous tension de l'électrovanne 20 (voir figure 7).

La figure 7 illustre une autre configuration du circuit d'alimentation 2 de la figure 6. Dans cette autre configuration, l'électrovanne 20 est en position ouverte comme illustrée à la figure 3. En effet, dès que l'unité ECU 100 reçoit des relevés R₃ de mesure de pression du troisième capteur de pression 101 qui indiquent que la pression dans le circuit d'alimentation 2 est descendue au niveau de la première pression maximale de service P1ₘₐₓ, voire en-dessous de ce niveau, par exemple, au niveau de la première limite supérieure de pression de service P1ₛᵤₚ, l'unité ECU 100 commande la mise sous tension de l'électrovanne 20, c'est-à-dire l'ouverture du premier canal de communication 33. Se faisant, le premier capteur de pression 10 se trouve exposé au gaz comprimé présent dans le circuit d'alimentation 2. Par cette disposition, l'unité ECU 100 reçoit des relevés R₁ de mesure de pression du premier capteur de pression 10. Les relevés R₁ de mesure du premier capteur de pression 10 permettent de mesurer la pression de réserve avec moins d'erreur que le troisième capteur de pression 101. Dès que les relevés R₁ de mesure de pression sont inférieurs ou égaux à la pression de réserve, l'unité ECU 100 commande l'allumage du témoin lumineux 103.

La figure 8 illustre un deuxième mode de réalisation d'un circuit d'alimentation selon l'invention. Dans cette variante de réalisation, le circuit d'alimentation 2 comprend deux réservoirs 50 de stockage d'un gaz comprimé, deux vannes d'alimentation 60, chacune des vannes 60 étant raccordée de manière étanche à un réservoir 50. Le circuit d'alimentation 2 comprend également deux tuyaux de raccordement 61, chacun raccordé de manière étanche à une vanne d'alimentation 60 et configuré pour transférer du gaz comprimé d'un réservoir 50 vers un dispositif de consommation de gaz comprimé, par exemple, un moteur électrique connecté à une pile à combustible (non représenté), à travers un détendeur (non représenté). Le dispositif de mesure de la pression 1 est raccordé de manière étanche à un tuyau de raccordement 61 par l'intermédiaire d'un raccord 62, par exemple un raccord en T. Alternativement, le dispositif de mesure de la pression 1 est raccordé de manière étanche à une vanne d'alimentation 60 (non représenté). Les autres caractéristiques de cette variante de réalisation sont les mêmes que celles du circuit d'alimentation 2 de la figure 6.

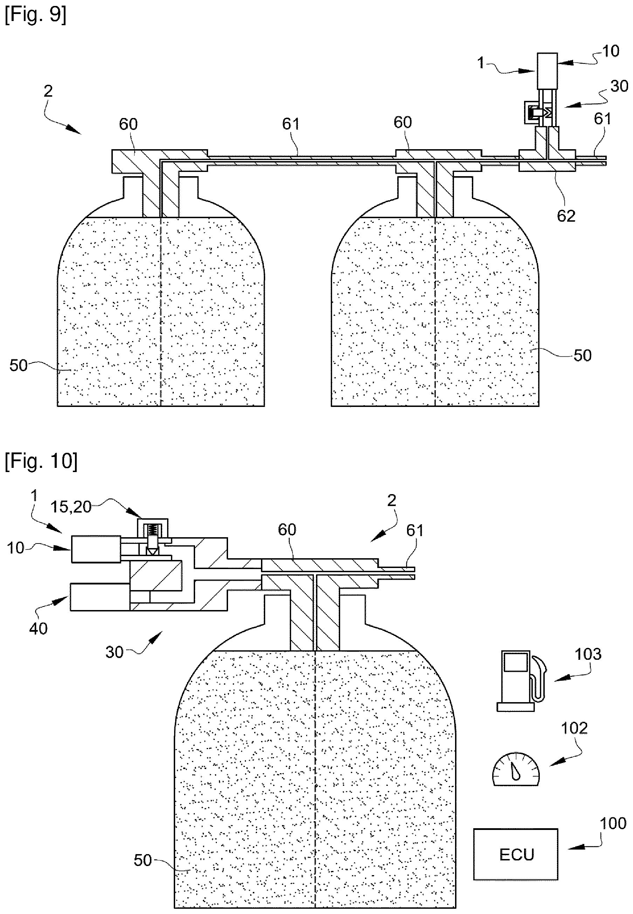

La figure 9 illustre une autre configuration du circuit d'alimentation 2 de la figure 8. Dans cette autre configuration, l'électrovanne 20 est en position ouverte comme illustrée à la figure 3. Les autres caractéristiques de cette variante de réalisation sont les mêmes que celles du circuit d'alimentation 2 de la figure 7.

La figure 10 illustre un troisième mode de réalisation d'un circuit d'alimentation en gaz comprimé 2 pour véhicule automobile. Le circuit d'alimentation 2 comprend un dispositif de mesure de la pression 1 tel qu'illustré à la figure 4. Le circuit d'alimentation 2 comprend également une vanne d'alimentation 60 raccordée de manière étanche à un réservoir 50 de stockage d'un gaz comprimé, un tuyau de raccordement 61 raccordé de manière étanche à la vanne d'alimentation 60 et configuré pour transférer du gaz comprimé du réservoir 50 vers un dispositif de consommation de gaz comprimé, par exemple, un moteur électrique connecté à une pile à combustible (non représenté), à travers un détendeur (non représenté). Le dispositif de mesure de la pression 1 est raccordé de manière étanche à la vanne d'alimentation 60. Alternativement, le dispositif de mesure de la pression 1 est raccordé de manière étanche au tuyau de raccordement 61 (non représenté). Afin de mesurer la pression qui règne dans le circuit d'alimentation 2, en particulier, quand la pression dans le circuit d'alimentation 2 est supérieure à la pression de réserve, le circuit d'alimentation 2 comprend un capteur secondaire formé d'un deuxième capteur de pression 40 apte à mesurer une deuxième pression nominale P2 d'un gaz comprimé entre une deuxième limite inférieure de pression de service P2_{inf} et une deuxième limite supérieure de pression de service P2ₛᵤₚ. Le deuxième capteur de pression 40 est dimensionné pour résister à une deuxième pression maximale de service P2ₘₐₓ supérieure à la première pression maximale de service P1ₘₐₓ, par exemple 1050 bar.

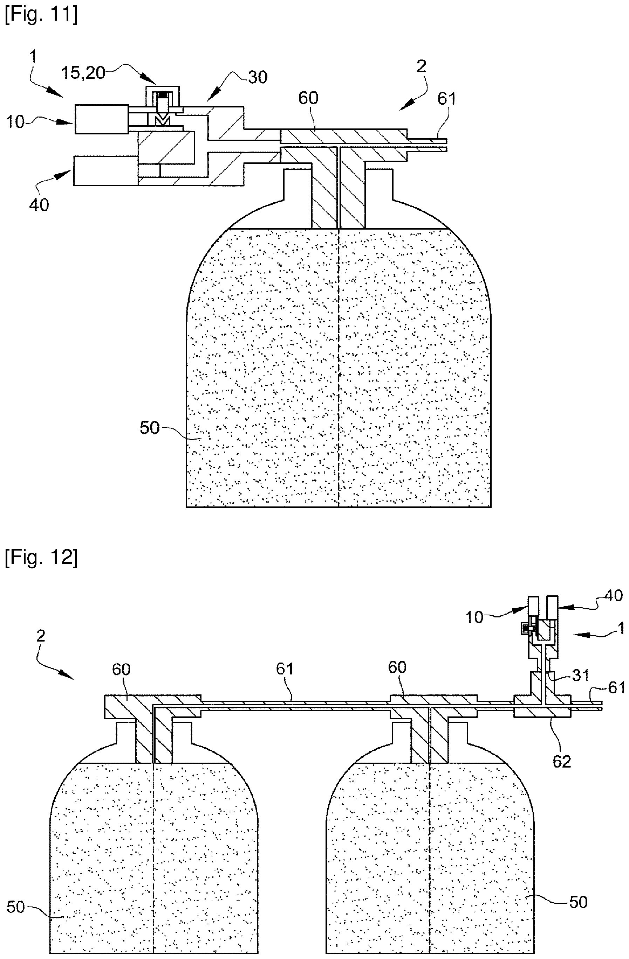

La première limite supérieure de pression de service P1ₛᵤₚ du premier capteur de pression 10 est inférieure ou égale à 15 % de la deuxième limite supérieure de pression de service P2ₛᵤₚ, de préférence, P1ₛᵤₚ est inférieure ou égale à 10 % de P2ₛᵤₚ, et mieux de préférence, P1ₛᵤₚ est inférieure ou égale à 5 % de P2ₛᵤₚ. Le deuxième capteur de pression 40 est agencé, au moins en partie, dans le boîtier 30 du dispositif de mesure de la pression 1. Dans un exemple, le gaz comprimé est de l'hydrogène gazeux comprimé à 700 bar, la pression de réserve est 100 bar, le premier capteur de pression 10 est un capteur basse pression dynamique et statique permettant une mesure de pression relative de 1 bar (P1_{inf}) à 100 bar (P1ₛᵤₚ) avec un précision de ± 2 % PE et le deuxième capteur de pression 40 est un capteur haute pression dynamique et statique permettant une mesure de pression relative de 1 bar (P2_{inf}) à 900 bar (P2ₛᵤₚ) avec un précision de ± 2 % PE. Une unité 100 de contrôle électronique ECU (« Electronic Control Unit » en langue anglaise) du circuit d'alimentation 2 reçoit des relevés R₂ de mesure de pression du deuxième capteur de pression 40 et les compare avec la première pression maximale de service P1ₘₐₓ du premier capteur de pression 10. Tant que les relevés R₂ sont supérieurs à P1ₘₐₓ, l'électrovanne 20 est au repos, le premier canal de communication 33 est obturé. Le conducteur est informé de l'autonomie restante de son véhicule par une jauge 102 et un témoin lumineux 103 sur le tableau de bord du véhicule. L'affichage de l'autonomie par la jauge 102 est mis à jour par l'unité ECU 100 en fonction des relevés R₂ de mesure de pression qu'elle reçoit du deuxième capteur de pression 40. De préférence, les relevés R₂ se font en continu afin d'afficher l'autonomie restante en temps réel. Dès que les relevés R₂ de mesure de pression sont inférieurs ou égaux à la première pression maximale de service P1ₘₐₓ ou à la première limite supérieure de pression de service P1ₛᵤₚ du premier capteur de pression 10, l'unité ECU 100 commande la mise sous tension de l'électrovanne 20 (voir figure 11).

La figure 11 illustre une autre configuration du circuit d'alimentation 2 de la figure 10. Dans cette autre configuration, l'électrovanne 20 est en position ouverte comme illustrée à la figure 5. En effet, dès que l'unité ECU 100 reçoit des relevés R₂ de mesure de pression du deuxième capteur de pression 40 qui indiquent que la pression dans le circuit d'alimentation 2 est descendue au niveau de la première pression maximale de service P1ₘₐₓ, voire en-dessous de ce niveau, par exemple, au niveau de la première limite supérieure de pression de service P1ₛᵤₚ, l'unité ECU 100 commande la mise sous tension de l'électrovanne 20, c'est-à-dire l'ouverture du premier canal de communication 33. Se faisant, le premier capteur de pression 10 se trouve exposé au gaz comprimé présent dans le circuit d'alimentation 2. Par cette disposition, l'unité ECU 100 reçoit des relevés R₁ de mesure de pression du premier capteur de pression 10. Les relevés R₁ de mesure du premier capteur de pression 10 permettent de mesurer la pression de réserve avec moins d'erreur que le deuxième capteur de pression 40. Dès que les relevés R₁ de mesure de pression sont inférieurs ou égaux à la pression de réserve, l'unité ECU 100 commande l'allumage du témoin lumineux 103.

La figure 12 illustre un quatrième mode de réalisation d'un circuit d'alimentation selon l'invention. Dans cette variante de réalisation, le circuit d'alimentation 2 comprend deux réservoirs 50 de stockage d'un gaz comprimé, deux vannes d'alimentation 60, chacune des vannes 60 étant raccordée de manière étanche à un réservoir 50. Le circuit d'alimentation 2 comprend également deux tuyaux de raccordement 61, chacun raccordé de manière étanche à une vanne d'alimentation 60 et configuré pour transférer du gaz comprimé d'un réservoir 50 vers un dispositif de consommation de gaz comprimé, par exemple, un moteur électrique connecté à une pile à combustible (non représenté), à travers un détendeur (non représenté). Le dispositif de mesure de la pression 1 est raccordé de manière étanche à un tuyau de raccordement 61 par l'intermédiaire d'un raccord 62, par exemple un raccord en T. Alternativement, le dispositif de mesure de la pression 1 est raccordé de manière étanche à une vanne d'alimentation 60 (non représenté). Les autres caractéristiques de cette variante de réalisation sont les mêmes que celles du circuit d'alimentation 2 de la figure 10.

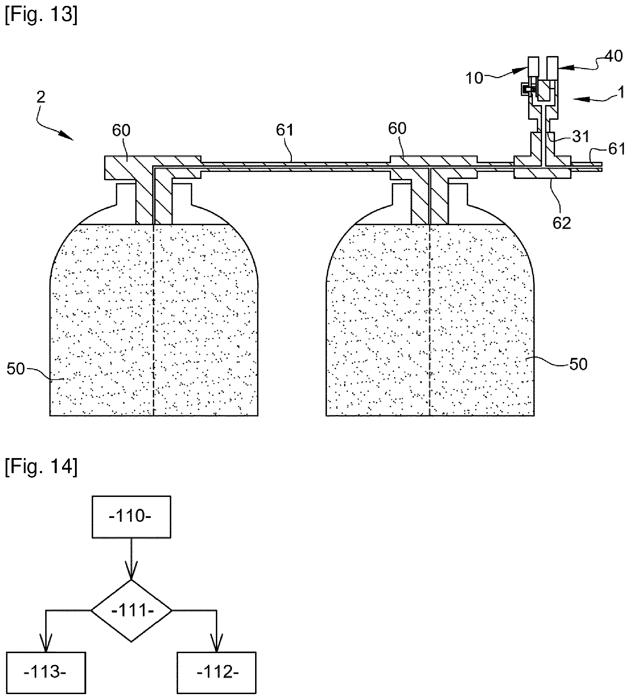

La figure 13 illustre une autre configuration du circuit d'alimentation 2 de la figure 12. Dans cette autre configuration, l'électrovanne 20 est en position ouverte comme illustrée à la figure 5. Les autres caractéristiques de cette variante de réalisation sont les mêmes que celles du circuit d'alimentation 2 de la figure 11.

Il est avantageux que l'électrovanne 20 soit mise hors tension dès que l'unité ECU 100 détecte qu'une vanne ou une trappe de remplissage (non représentée) d'un réservoir 50 de stockage d'un gaz comprimé est ouverte, même si la pression initiale dans le circuit d'alimentation 2 est inférieure à la première pression maximale de service P1ₘₐₓ. Par cette disposition, on protège le premier capteur de pression 10 contre une augmentation brutale de la pression dans le circuit d'alimentation 2 due à un remplissage trop rapide du réservoir 50. En effet, l'électrovanne 20 pourrait ne pas se fermer assez vite à cause du temps de réponse du premier capteur de pression 10, du temps de réaction de l'unité ECU 100 et de l'inertie mécanique de l'électrovanne 20.

De préférence, le premier capteur de pression 10 et/ou le deuxième capteur de pression 40 et/ou le troisième capteur de pression 101 est un capteur de pression à membrane.

Avantageusement, le corps 24 de l'électrovanne 20 est issu, au moins en partie, de matière du boîtier 30. Ceci permet de fabriquer un dispositif de mesure 1 compact et à moindre coût.

La mesure de la pression dans le circuit d'alimentation 2 par le premier capteur 10, respectivement le deuxième capteur de pression 40, respectivement le troisième capteur de pression 101, n'est pas nécessairement une mesure en continu. En effet, pour limiter la consommation d'énergie de l'électrovanne 20, il est avantageux de mettre l'électrovanne 20 sous tension quelques secondes par période de temps, par exemple, 5 à 20 secondes toutes les 1 à 10 minutes.

La tension d'alimentation de l'électrovanne 20 est de 12v dans un dispositif de mesure de la pression dans véhicule automobile du type voiture particulière. La tension d'alimentation de l'électrovanne 20 peut être différente dans d'autres applications. En effet, dans un dispositif de mesure de la pression dans un véhicule automobile du type poids lourd ou bus, la tension d'alimentation est de 24v ou 48v. La puissance électrique nécessaire pour ouvrir l'électrovanne 20 dépend de la raideur du ressort 23 et de la surface de contact du noyau mobile 21 avec le siège 25, elle est typiquement de 15 à 30 W.

Un procédé de mesure de la pression dans un circuit d'alimentation en gaz comprimé est également décrit. Ce procédé comprend les étapes suivantes :
- fournir le premier capteur de pression 10 dans le circuit d'alimentation en gaz comprimé 2,
- isoler le premier capteur de pression 10 du gaz comprimé présent dans le circuit d'alimentation 2 quand la pression dans le circuit d'alimentation 2 est supérieure à la première pression maximale de service P1ₘₐₓ du premier capteur de pression 10,
- exposer le premier capteur de pression 10 au gaz comprimé présent dans le circuit d'alimentation 2 quand la pression dans le circuit d'alimentation 2 est inférieure ou égale à la première limite supérieure de pression de service P1ₛᵤₚ du premier capteur de pression 10,
- effectuer des premiers relevés R₁ de mesure de pression avec le premier capteur de pression 10 quand le premier capteur de pression 10 est exposé au gaz comprimé présent dans le circuit d'alimentation 2.

Avantageusement, le procédé de mesure de la pression comprend les étapes suivantes :
- fournir le deuxième capteur de pression 40 dans le circuit d'alimentation en gaz comprimé 2,
- exposer le deuxième capteur de pression 40 au gaz comprimé présent dans le circuit d'alimentation 2 quand la pression dans le circuit d'alimentation 2 est supérieure à la première limite supérieure de pression de service P1ₛᵤₚ du premier capteur de pression 10,
- effectuer des seconds relevés R₂ de mesure de pression avec le deuxième capteur de pression 40 quand le deuxième capteur de pression 40 est exposé au gaz comprimé présent dans le circuit d'alimentation 2.

Un procédé de contrôle de plausibilité du fonctionnement d'un dispositif de mesure de la pression dans un circuit d'alimentation en gaz comprimé pour véhicule automobile est également décrit. Ce procédé comprend les étapes suivantes :
- fournir le premier capteur de pression 10 dans le circuit d'alimentation en gaz comprimé,
- fournir le deuxième capteur de pression 40 dans le circuit d'alimentation en gaz comprimé,
- exposer le premier capteur de pression 10 au gaz comprimé présent dans le circuit d'alimentation 2 quand la pression dans le circuit d'alimentation 2 est inférieure ou égale à la première limite supérieure de pression de service P1ₛᵤₚ du premier capteur de pression 10,
- exposer le deuxième capteur de pression 40 au gaz comprimé présent dans le circuit d'alimentation 2 quand la pression dans le circuit d'alimentation 2 est inférieure ou égale à la première limite supérieure de pression de service P1ₛᵤₚ du premier capteur de pression 10,
- effectuer des premiers relevés R₁ de mesure de pression avec le premier capteur de pression 10,
- effectuer des seconds relevés R₂ de mesure de pression avec le deuxième capteur de pression 40,
- exécuter un algorithme de contrôle de plausibilité des premiers relevés R₁ et des seconds relevés R₂ pour détecter un défaut de fonctionnement du premier 10 et/ou du deuxième 40 capteur de pression.

La figure 14 illustre par un diagramme une partie du procédé de contrôle de plausibilité selon l'invention. En continuant à recevoir des relevés de mesure du deuxième capteur de pression 40, pendant que le premier capteur de pression 10 envoie ses relevés de mesure à l'unité ECU 100, on obtient à l'étape 110 des premiers relevés R₁ de mesure de pression du premier capteur de pression 10 et des seconds relevés R₂ de mesure de pression du deuxième capteur de pression 40. Par suite, l'unité ECU 100 est capable d'exécuter un algorithme de contrôle de plausibilité afin de détecter le mauvais fonctionnement d'un des capteurs de pression. Un algorithme de contrôle de plausibilité est, par exemple, une comparaison à l'étape 111 de l'écart entre R₁ et R₂ à un seuil prédéterminé Rs. Dans un exemple, tant que le résultat de la soustraction R₁-R₂ (en valeur absolue) est inférieur à Rs, l'unité ECU 100 détecte à l'étape 112 un bon fonctionnement des premier 10 et deuxième 40 capteurs de pression. Dès que le résultat de la soustraction R₁-R₂ (en valeur absolue) est supérieur ou égal à Rs, l'unité ECU 100 détecte à l'étape 113 un mauvais fonctionnement d'au moins un des premier 10 et deuxième 40 capteurs de pression. Le seuil prédéterminé Rs est défini, par exemple, en fonction de caractéristiques des deux capteurs de pression 10 et 40 comme, par exemple, la plage de mesure, l'étendue de mesure, la pression maximale de service ou la précision de la mesure.

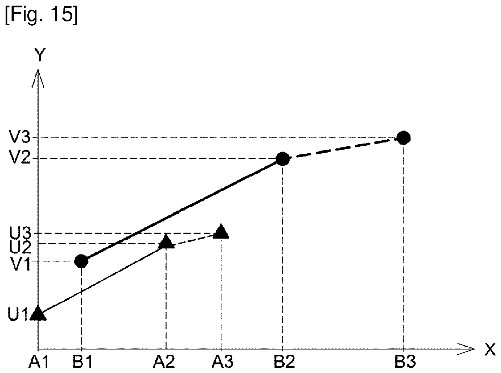

La figure 15 illustre par un graphique l'évolution de la tension électrique à la sortie du premier capteur de pression 10, respectivement, du deuxième capteur de pression 40, en fonction de la pression subie par le premier capteur 10, respectivement, le deuxième capteur 40, à température ambiante. La tension électrique est portée sur l'axe des ordonnées Y et la pression est portée sur l'axe des abscisses X.

Par soucis de simplification graphique, chaque courbe de tension électrique est construite à partir de trois points. Les trois points d'une courbe donnée sont placés de façon à montrer que la tension électrique augmente de manière proportionnelle à la pression entre un premier point et un deuxième point (trait plein) puis de manière non proportionnelle entre le deuxième point et un troisième point (trait pointillé). Toutefois, la distance mutuelle entre les points d'une courbe et la distance qui sépare deux courbes n'est pas réelle.

Lorsque la pression subie par le premier capteur de pression 10 passe d'une valeur A1 à une valeur A2, où A1 est la première limite inférieure de pression de service P1_{inf}, par exemple 1 bar, et A2 est la première limite supérieure de pression de service P1ₛᵤₚ, par exemple 100 bar à température ambiante, la tension de sortie du premier capteur de pression 10 passe d'une valeur U1, par exemple 0,5 volt, à une valeur U2, par exemple 4,5 volt. La plage s'étendant de A1 à A2 est la plage de mesure de la pression nominale. La différence algébrique A2-A1 représente l'étendue de la mesure. Dans cette plage de mesure, la déformation du diaphragme du premier capteur de pression 10 est élastique et la tension de sortie est proportionnelle à la déformation du diaphragme.

Lorsque la pression subie par le premier capteur de pression 10 passe de la valeur A2 à une valeur A3, où A3 est la première pression maximale de service P1ₘₐₓ, par exemple 150 bar, la tension de sortie du premier capteur de pression 10 passe de la valeur U2 à une valeur U3, par exemple 4,9 volt. Dans la plage s'étendant de A2 à A3, le premier capteur de pression 10 fonctionne encore car la déformation du diaphragme du premier capteur de pression 10 est toujours élastique mais la tension de sortie n'est plus proportionnelle à la déformation du diaphragme, autrement dit, la valeur A3 n'est plus représentative de la pression subie par le premier capteur de pression 10.

Lorsque la pression subie par le premier capteur de pression 10 est supérieure à la valeur A3, le premier capteur de pression 10 garde des dommages permanents. En effet, au-dessus de la première pression maximale de service P1ₘₐₓ, la déformation du diaphragme du premier capteur de pression 10 n'est plus élastique mais plastique, le premier capteur de pression 10 ne fonctionne plus.

Lorsque la pression subie par le deuxième capteur de pression 40 passe d'une valeur B1 à une valeur B2, où B1 est la deuxième limite inférieure de pression de service P2_{inf}, par exemple 1 bar, et B2 est la deuxième limite supérieure de pression de service P2ₛᵤₚ, par exemple 700 bar à température ambiante, la tension de sortie du deuxième capteur de pression 40 passe d'une valeur V1, par exemple 0,5 volt, à une valeur V2, par exemple 4,5 volt. La plage s'étendant de B1 à B2 est la plage de mesure de la pression nominale. La différence algébrique B2-B1 représente l'étendue de la mesure. Dans cette plage de mesure, la déformation du diaphragme du deuxième capteur de pression 40 est élastique et la tension de sortie est proportionnelle à la déformation du diaphragme.

Lorsque la pression subie par le deuxième capteur de pression 40 passe de la valeur B2 à une valeur B3, où B3 est la deuxième pression maximale de service P2ₘₐₓ, par exemple 1050 bar, la tension de sortie du deuxième capteur de pression 40 passe de la valeur V2 à une valeur V3, par exemple 4,8 volt. Dans la plage s'étendant de B2 à B3, le deuxième capteur de pression 40 fonctionne encore car la déformation du diaphragme du deuxième capteur de pression 40 est toujours élastique mais la tension de sortie n'est plus proportionnelle à la déformation du diaphragme, autrement dit, la valeur B3 n'est plus représentative de la pression subie par le deuxième capteur de pression 40.

Lorsque la pression subie par le deuxième capteur de pression 40 est supérieure à la valeur B3, le deuxième capteur de pression 40 garde des dommages permanents. En effet, au-dessus de la deuxième pression maximale de service P2ₘₐₓ, la déformation du diaphragme du deuxième capteur de pression 40 n'est plus élastique mais plastique, le deuxième capteur de pression 40 ne fonctionne plus.

Bien que le graphique de la figure 15 montre un décalage en tension entre la courbe de tension électrique à la sortie du premier capteur de pression 10 et la courbe de tension électrique à la sortie du deuxième capteur de pression 40, ce décalage n'est pas nécessaire. Autrement dit, quand B1 est égale à A1, on peut avoir V1 égale à U1. De même, quand B1 est égale à A2, on peut avoir V1 égale à U2.

Dans un véhicule automobile fonctionnant au gaz comprimé, par exemple à l'hydrogène gazeux comprimé, le circuit d'alimentation en gaz comprimé 2 alimente un dispositif de consommation du gaz comprimé, par exemple, un moteur électrique connecté à une pile à combustible (non représenté), à travers un détendeur (non représenté). Le rôle du détendeur est de détendre le gaz comprimé contenu dans le réservoir de stockage de gaz comprimé à une pression d'utilisation de quelques bars. Les capteurs de pression 10, 40, 101 décrits précédemment sont situés en amont du détendeur, pas en aval du détendeur. Les termes « amont » et « aval » sont définis par rapport au sens normal de circulation du gaz comprimé, le sens normal étant du circuit d'alimentation 2 vers le dispositif de consommation (non représenté). Selon la configuration adoptée, on remarque que le capteur secondaire est formé soit du deuxième capteur de pression 40, soit du troisième capteur de pression 101. Autrement dit, quand le deuxième capteur de pression 40 est présent, le troisième capteur de pression 101 est absent, et vis-versa. Bien qu'il ne soit pas décrit de configuration où les deux capteurs de pression 40 et 101 sont présents en même temps, rien n'empêche cette configuration d'exister, en particulier, si on souhaite créer une redondance du capteur secondaire.

## Revendications

1. Dispositif de mesure de la pression (1) configuré pour mesurer la pression dans un circuit d'alimentation en gaz comprimé pour véhicule automobile, dispositif comprenant un boîtier (30) dans lequel sont agencés au moins en partie :
• un premier capteur de pression (10) apte à mesurer une première pression nominale P1 d'un gaz comprimé entre une première limite inférieure de pression de service P1_{inf} et une première limite supérieure de pression de service P1ₛᵤₚ, ledit premier capteur de pression (10) étant dimensionné pour résister à une première pression maximale de service P1ₘₐₓ,
• un deuxième capteur de pression (40) apte à mesurer une deuxième pression nominale P2 d'un gaz comprimé entre une deuxième limite inférieure de pression de service P2_{inf} et une deuxième limite supérieure de pression de service P2ₛᵤₚ, telle que P2ₛᵤₚ > P1ₛᵤₚ et telle que P2_{inf} ≤ P1ₛᵤₚ,
• un moyen de protection (15) dudit premier capteur de pression (10) configuré pour alternativement :
- isoler ledit premier capteur de pression (10) dudit gaz comprimé quand P > P1ₘₐₓ, où P est la pression susceptible de s'exercer sur ledit premier capteur de pression (10) mesurée par le deuxième capteur de pression (40), et
- exposer ledit premier capteur de pression (10) audit gaz comprimé quand P ≤ P1ₛᵤₚ,
ledit boîtier (30) comprenant :
- un premier raccordement d'entrée de gaz (31),
- un deuxième raccordement d'utilisation (32),
- un troisième raccordement d'utilisation (35) configuré pour raccorder de manière étanche ledit deuxième capteur de pression (40) audit dispositif de mesure de pression (1),
- un premier canal de communication (33) entre ledit premier raccordement d'entrée de gaz (31) et ledit deuxième raccordement d'utilisation (32),
- un deuxième canal de communication (36) entre ledit premier raccordement d'entrée de gaz (31) et ledit troisième raccordement d'utilisation (35), et
- un moyen d'obturation réversible (34) dudit premier canal de communication (33), le moyen de protection (15) comprenant une électrovanne (20) 2-voies normalement fermée à commande directe ou à servocommande comprenant un noyau mobile (21), une voie d'entrée (26) et une voie de sortie (27) de gaz comprimé, le moyen d'obturation réversible (34) comprenant ledit noyau mobile (21) de ladite électrovanne (20), ledit noyau (21) étant mobile entre une position d'obturation dudit premier canal de communication (33) où ledit premier capteur de pression (10) est isolé dudit gaz comprimé et une position d'ouverture dudit premier canal de communication (33) où ledit premier capteur de pression (10) est exposé audit gaz comprimé,
le premier raccordement d'entrée de gaz étant configuré pour raccorder de manière étanche ledit dispositif de mesure de pression audit circuit d'alimentation en gaz comprimé et tel que la voie d'entrée de ladite électrovanne est tournée vers ledit premier raccordement d'entrée de gaz et le deuxième raccordement d'utilisation étant configuré pour raccorder de manière étanche ledit premier capteur de pression audit dispositif de mesure de pression et tel que la voie de sortie de ladite électrovanne est tournée vers ledit deuxième raccordement d'utilisation,

2. Dispositif selon la revendication 1, **caractérisé en ce que** ledit deuxième capteur de pression (40) est donné avec une erreur de mesure E2 et ledit moyen de protection (15) est configuré pour exposer ledit premier capteur de pression (10) audit gaz comprimé quand P ≤ P1ₘₐₓ - |E2|, préférentiellement, quand P ≤ P1ₛᵤₚ + |E2|, encore plus préférentiellement, quand P ≤ P1ₛᵤₚ - |E2|, où |E2| est la valeur absolue de E2.

3. Dispositif selon la revendication précédente, **caractérisé en ce que** ledit moyen de protection (15) est configuré pour isoler ledit premier capteur de pression (10) dudit gaz comprimé quand P > P1ₘₐₓ - |E2|, préférentiellement, quand P > P1ₛᵤₚ + |E2|.

4. Dispositif selon l'une quelconque des revendications précédentes, **caractérisé en ce que** ladite électrovanne (20) comprend un corps (24) issu, au moins en partie, de matière du boîtier (30).

5. Dispositif selon l'une quelconque des revendications précédentes, **caractérisé en ce qu'**il comprend en outre une interface électrique commune aux premier (10) et deuxième (40) capteurs de pression.

6. Dispositif selon l'une quelconque des revendications précédentes, **caractérisé en ce que** ladite première limite supérieure de pression de service P1ₛᵤₚ est inférieure ou égale à 15 % de ladite deuxième limite supérieure de pression de service P2ₛᵤₚ, de préférence, P1ₛᵤₚ est inférieure ou égale à 10 % de P2ₛᵤₚ, et mieux de préférence, P1ₛᵤₚ est inférieure ou égale à 5 % de P2ₛᵤₚ.

7. Circuit d'alimentation en gaz comprimé (2) pour véhicule automobile comprenant :
- un dispositif de mesure de la pression (1) selon l'une quelconque des revendications précédentes,
- au moins un réservoir (50) de stockage d'un gaz comprimé,
- au moins une vanne d'alimentation (60) raccordée de manière étanche audit au moins un réservoir (50) de stockage d'un gaz comprimé,
- au moins un tuyau de raccordement (61) raccordé de manière étanche à ladite au moins une vanne d'alimentation (60), configuré pour transférer du gaz comprimé dudit au moins un réservoir (50) vers un dispositif de consommation de gaz comprimé,
ledit dispositif de mesure de la pression (1) est raccordé de manière étanche à ladite au moins une vanne d'alimentation (60) ou audit au moins un tuyau de raccordement (61).

8. Circuit d'alimentation selon la revendication précédente, **caractérisé en ce qu'**il comprend une unité (100) de contrôle électronique configurée pour recevoir des relevés R₂ de mesure de pression dudit deuxième capteur de pression (40) et commander la mise sous tension de ladite électrovanne (20) dès que R₂ ≤ P1ₘₐₓ ou dès que R₂ ≤ P1ₛᵤₚ.

9. Procédé de mesure de la pression dans un circuit d'alimentation en gaz comprimé (2) selon l'une quelconque des revendications 7 à 8, comprenant les étapes suivantes :
- fournir le premier capteur de pression (10) dans le circuit d'alimentation en gaz comprimé (2),
- isoler ledit premier capteur de pression (10) dudit gaz comprimé présent dans ledit circuit d'alimentation (2) quand P > P1ₘₐₓ,
- exposer ledit premier capteur de pression (10) audit gaz comprimé présent dans ledit circuit d'alimentation (2) quand P ≤ P1ₛᵤₚ,
- effectuer des premiers relevés R₁ de mesure de pression avec ledit premier capteur de pression (10) quand ledit premier capteur de pression (10) est exposé audit gaz comprimé présent dans ledit circuit d'alimentation (2).

10. Procédé selon la revendication précédente comprenant les étapes suivantes :
- fournir le deuxième capteur de pression (40) dans le circuit d'alimentation en gaz comprimé (2),
- exposer ledit deuxième capteur de pression (40) audit gaz comprimé présent dans ledit circuit d'alimentation (2) quand P > P1ₛᵤₚ,
- effectuer des seconds relevés R₂ de mesure de pression avec ledit deuxième capteur de pression (40) quand ledit deuxième capteur de pression (40) est exposé audit gaz comprimé présent dans ledit circuit d'alimentation (2).

11. Procédé de contrôle de plausibilité du fonctionnement d'un dispositif de mesure de la pression (1) dans un circuit d'alimentation en gaz comprimé (2) selon l'une quelconque des revendications 7 à 8, comprenant les étapes suivantes :
- fournir le premier capteur de pression (10) dans le circuit d'alimentation en gaz comprimé,
- fournir le deuxième capteur de pression (40) dans le circuit d'alimentation en gaz comprimé,
- exposer ledit premier capteur de pression (10) audit gaz comprimé présent dans ledit circuit d'alimentation (2) quand P ≤ P1ₛᵤₚ,
- exposer ledit deuxième capteur de pression (40) audit gaz comprimé présent dans ledit circuit d'alimentation (2) quand P ≤ P1ₛᵤₚ,
- effectuer des premiers relevés R₁ de mesure de pression avec ledit premier capteur de pression (10),
- effectuer des seconds relevés R₂ de mesure de pression avec ledit deuxième capteur de pression (40),
- exécuter un algorithme de contrôle de plausibilité desdits premiers relevés R₁ et desdits seconds relevés R₂ pour détecter un défaut de fonctionnement dudit premier (10) et/ou dudit deuxième (40) capteur de pression.

## Patentansprüche

1. Druckmessvorrichtung (1), die konfiguriert ist, um den Druck in einem Druckgasversorgungskreislauf für ein Kraftfahrzeug zu messen, wobei die Vorrichtung ein Gehäuse (30) aufweist, in dem zumindest teilweise angeordnet sind:
• einen ersten Drucksensor (10), der geeignet ist, einen ersten Nenndruck P1 eines komprimierten Gases zwischen einer ersten unteren Betriebsdruckgrenze P1_{inf} und einer ersten oberen Betriebsdruckgrenze P1ₛᵤₚ zu messen, wobei der erste Drucksensor (10) so dimensioniert ist, dass er einem ersten maximalen Betriebsdruck P1ₘₐₓ standhält,
• einen zweiten Drucksensor (40), der geeignet ist, einen zweiten Nenndruck P2 eines komprimierten Gases zwischen einer zweiten unteren Betriebsdruckgrenze P2_{inf} und einer zweiten oberen Betriebsdruckgrenze P2ₛᵤₚ zu messen, so dass P2ₛᵤₚ > P1ₛᵤₚ und so dass P2_{inf} ≤ P1ₛᵤₚ
• ein Mittel (15) zum Schutz des ersten Drucksensors (10), das konfiguriert ist, um abwechselnd:
- den ersten Drucksensor (10) von dem komprimierten Gas zu isolieren, wenn P > P1ₘₐₓ ist, wobei P der Druck ist, der auf den ersten Drucksensor (10) ausgeübt werden kann, gemessen durch den zweiten Drucksensor (40), und
- den ersten Drucksensor (10) dem komprimierten Gas auszusetzen, wenn P ≤ P1ₛᵤₚ,
wobei das Gehäuse (30) aufweist:
- einen ersten Gaseinlassanschluss (31)
- einen zweiten Verbraucheranschluss (32),
- einen dritten Verbraucheranschluss (35), der konfiguriert ist, um den zweiten Drucksensor (40) dicht mit der Druckmessvorrichtung (1) zu verbinden,
- einen ersten Verbindungskanal (33) zwischen dem ersten Gaseinlassanschluss (31) und dem zweiten Verbraucheranschluss (32),
- einen zweiten Verbindungskanal (36) zwischen dem ersten Gaseinlassanschluss (31) und dem dritten Verbraucheranschluss (35), und
- ein Mittel (34) zum reversiblen Verschließen des ersten Verbindungskanals (33),
wobei das Schutzmittel (15) ein normalerweise geschlossenes 2-Wege-Magnetventil (20) mit direkter Steuerung oder Servosteuerung aufweist, das einen beweglichen Kern (21), einen Einlasskanal (26) und einen Auslasskanal (27) für komprimiertes Gas aufweist,
wobei das reversible Verschlussmittel (34) den beweglichen Kern (21) des Magnetventils (20) aufweist, wobei der Kern (21) zwischen einer Verschlussposition des ersten Verbindungskanals (33), in der der erste Drucksensor (10) von dem komprimierten Gas isoliert ist, und einer Öffnungsposition des ersten Verbindungskanals (33), in der der erste Drucksensor (10) dem komprimierten Gas ausgesetzt ist, beweglich ist,
wobei der erste Gaseingangsanschluss so konfiguriert ist, dass er die Druckmessvorrichtung abdichtend mit dem Druckgasversorgungskreislauf verbindet, und derart, dass der Einlasskanal des Magnetventils dem ersten Gaseingangsanschluss zugewandt ist, und der zweite Verwendungsanschluss so konfiguriert ist, dass er den ersten Drucksensor abdichtend mit der Druckmessvorrichtung verbindet, und derart, dass der Auslasskanal des Magnetventils dem zweiten Verwendungsanschluss zugewandt ist.

2. Vorrichtung nach Anspruch 1, **dadurch gekennzeichnet, dass** der zweite Drucksensor (40) mit einem Messfehler E2 gegeben ist und das Schutzmittel (15) so konfiguriert ist, dass es den ersten Drucksensor (10) dem komprimierten Gas aussetzt, wenn P ≤ P1ₘₐₓ - |E2|, bevorzugt, wenn P ≤ P1ₛᵤₚ + |E2|, noch bevorzugter, wenn P ≤ P1ₛᵤₚ - |E2|, wobei |E2| der Absolutwert von E2 ist.

3. Vorrichtung nach dem vorhergehenden Anspruch, **dadurch gekennzeichnet, dass** das Schutzmittel (15) so konfiguriert ist, dass es den ersten Drucksensor (10) von dem komprimierten Gas isoliert, wenn P > P1ₘₐₓ - |E2|, vorzugsweise, wenn P > P1ₛᵤₚ + |E2|.

4. Vorrichtung nach einem der vorhergehenden Ansprüche, **dadurch gekennzeichnet, dass** das Magnetventil (20) einen Körper (24) aufweist, der zumindest teilweise aus dem Material des Gehäuses (30) stammt.

5. Vorrichtung nach einem der vorhergehenden Ansprüche, **dadurch gekennzeichnet, dass** sie außerdem eine elektrische Schnittstelle aufweist, die dem ersten (10) und dem zweiten (40) Drucksensor gemeinsam ist.

6. Vorrichtung nach einem der vorhergehenden Ansprüche, **dadurch gekennzeichnet, dass** die erste obere Betriebsdruckgrenze P1ₛᵤₚ kleiner oder gleich 15 % der zweiten oberen Betriebsdruckgrenze P2ₛᵤₚ ist, vorzugsweise P1ₛᵤₚ kleiner oder gleich 10 % von P2ₛᵤₚ ist, und noch besser P1ₛᵤₚ kleiner oder gleich 5 % von P2ₛᵤₚ ist.

7. Druckgasversorgungskreislauf (2) für ein Kraftfahrzeug, aufweisend:
- eine Druckmessvorrichtung (1) nach einem der vorhergehenden Ansprüche,
- mindestens einen Behälter (50) zur Speicherung eines komprimierten Gases,
- mindestens ein Versorgungsventil (60), das dicht mit dem mindestens einen Speicherbehälter (50) für ein komprimiertes Gas verbunden ist,
- mindestens ein Verbindungsrohr (61), das dicht mit dem mindestens einen Versorgungsventil (60) verbunden ist, das so konfiguriert ist, dass es komprimiertes Gas von dem mindestens einen Behälter (50) zu einer Vorrichtung zum Verbrauch von komprimiertem Gas überträgt,
wobei die Druckmessvorrichtung (1) dicht mit dem mindestens einen Versorgungsventil (60) oder dem mindestens einen Verbindungsrohr (61) verbunden ist.

8. Versorgungsschaltung nach dem vorhergehenden Anspruch, **dadurch gekennzeichnet, dass** sie eine elektronische Steuereinheit (100) aufweist, die so konfiguriert ist, dass sie Messwerte R2 der Druckmessung des zweiten Drucksensors (40) empfängt und das Einschalten des Magnetventils (20) steuert, sobald R₂ ≤ P1ₘₐₓ oder sobald R₂ ≤ P1ₛᵤₚ.

9. Verfahren zum Messen des Drucks in einem Druckgasversorgungskreislauf (2) nach einem der Ansprüche 7 bis 8, umfassend die folgenden Schritte:
- Bereitstellen des ersten Drucksensors (10) in der Druckgasversorgungsleitung (2),
- Isolieren des ersten Drucksensors (10) von dem in dem Versorgungskreislauf (2) vorhandenen komprimierten Gas, wenn P > P1ₘₐₓ ist,
- Aussetzen des ersten Drucksensors (10) dem in dem Versorgungskreislauf (2) vorhandenen komprimierten Gas, wenn P ≤ P1ₛᵤₚ,
- Erheben von ersten Druckmesswerten R₁ mit dem ersten Drucksensor (10), wenn der erste Drucksensor (10) dem in dem Versorgungskreislauf (2) vorhandenen komprimierten Gas ausgesetzt ist.

10. Verfahren nach dem vorhergehenden Anspruch, das die folgenden Schritte umfasst:
- Bereitstellen des zweiten Drucksensors (40) in dem Druckgasversorgungskreislauf (2),
- Aussetzen des zweiten Drucksensors (40) dem in der Versorgungsleitung (2) vorhandenen komprimierten Gas, wenn P > P1ₛᵤₚ ist,
- Durchführen von zweiten Druckmesswerten R2 mit dem zweiten Drucksensor (40), wenn der zweite Drucksensor (40) dem in dem Versorgungskreislauf (2) vorhandenen komprimierten Gas ausgesetzt ist.

11. Verfahren zur Plausibilitätsprüfung der Funktion einer Druckmessvorrichtung (1) in einem Druckgasversorgungskreislauf (2) nach einem der Ansprüche 7 bis 8, mit den folgenden Schritten:
- Bereitstellen des ersten Drucksensors (10) in der Druckgasversorgungsleitung,
- Bereitstellen des zweiten Drucksensors (40) in der Druckgasversorgungsleitung,
- Aussetzen des ersten Drucksensors (10) dem in dem Versorgungskreislauf (2) vorhandenen komprimierten Gas, wenn P ≤ P1ₛᵤₚ,
- den zweiten Drucksensor (40) dem in dem Versorgungskreislauf (2) vorhandenen komprimierten Gas aussetzen, wenn P ≤ P1ₛᵤₚ,
- erste Druckmesswerte R1 mit dem ersten Drucksensor (10) durchführen,
- zweite Druckmessungserhebungen R2 mit dem zweiten Drucksensor (40) durchführen,
- Ausführen eines Algorithmus zur Plausibilitätsprüfung der ersten Messwerte R1 und der zweiten Messwerte R2, um eine Fehlfunktion des ersten (10) und/oder des zweiten (40) Drucksensors zu erkennen.

## Claims

1. Pressure measuring device (1) configured to measure pressure in a compressed gas supply system for motor vehicles, device comprising a housing (30) in which are arranged at least in part:
• a first pressure sensor (10) capable of measuring a first nominal pressure P1 of a compressed gas between a first lower working pressure limit P1inf and a first upper working pressure limit P1sup, said first pressure sensor (10) being sized to withstand a first maximum working pressure P1max,
• a second pressure sensor (40) capable of measuring a second nominal pressure P2 of a compressed gas between a second lower working pressure limit P2inf and a second upper working pressure limit P2sup, such as P2sup > P1sup and such as P2inf ≤ P1sup,
• a means of protection (15) said first pressure sensor (10) configured for alternatively:
- isolate said first pressure sensor (10) of said compressed gas when P > P1max, wherein P is the pressure likely to be exerted on said first pressure sensor (10) measured by the second pressure sensor (40), and
- expose said first pressure sensor (10) to said compressed gas when P ≤ P1sup,
said enclosure (30) comprising:
- a first gas inlet connection (31),
- a second connection of use (32),
- a third connection of use (35) configured to connect in a tight way said second pressure sensor (40) to said pressure measuring device (1),
- a first communication channel (33) between said first gas inlet connection (31) and said second use connection (32),
- a second communication channel (36) between said first gas inlet connection (31) and said third use connection (35), and
- a reversible closing means (34) of said first communication channel (33),
the means of protection (15) comprising a direct control or servo control 2-channels solenoid valve (20) normally closed comprising a movable core (21), an inlet channel (26) and an outlet channel (27) for compressed gas,
the reversible shuttering means (34) comprising said mobile core (21) of said solenoid valve (20), said core (21) being mobile between a shutter position of said first communication channel (33) wherein said first pressure sensor (10) is isolated from said compressed gas and an opening position of said first communication channel (33) wherein said first pressure sensor (10) is exposed to said compressed gas, the first gas inlet connection being configured to tightly connect said pressure measuring device to said compressed gas supply circuit and such that the inlet channel of said solenoid valve is turned to said first gas inlet connection and the second use connection being configured to tightly connect said first pressure sensor to said pressure measuring device and such as the outlet channel of said Solenoid valve is turned towards said second connection of use.

2. Device according to claim 1, **characterized in that** said second pressure sensor (40) is given with a measurement error E2 and said protective means (15) is configured to expose said first pressure sensor (10) to said compressed gas when P ≤ P1max - |E2|, preferably, when P ≤ P1sup + |E2|, even more preferably, when P ≤ P1sup - |E2|, where |E2| is the absolute value of E2.

3. Device according to the preceding claim, **characterized in that** said means of protection (15) is configured to isolate said first pressure sensor (10) from said compressed gas when P > P1max - |E2|, preferably, when P > P1ₛᵤₚ + |E2|.

4. Device according to any one of the preceding claims, **characterized in that** said solenoid valve (20) comprises a body (24) derived, at least in part, from material of the housing (30).

5. Device according to any one of the preceding claims, **characterized in that** it further comprises an electrical interface common to the first (10) and second (40) pressure sensors.

6. Device according to any one of the preceding claims, **characterized in that** said first upper working pressure limit P1sup is less than or equal to 15% of said second upper working pressure limit P2sup, preferably, P1sup is less than or equal to 10% of P2sup, and more preferably, P1sup is less than or equal to 5% of P2sup.

7. Compressed gas supply system (2) for motor vehicle comprising:
- a pressure measuring device (1) according to any one of the preceding claims,
- at least one storage tank (50) for compressed gas,
- at least one supply valve (60) tightly connected to said at least one storage tank (50) for compressed gas,
- at least one connecting pipe (61) tightly connected to said at least one supply valve (60), configured to transfer compressed gas from said at least one tank (50) to a compressed gas consumption device,
said pressure measuring device (1) is tightly connected to said at least one supply valve (60) or to said at least one connecting pipe (61).

8. Supply circuit according to the preceding claim, **characterized in that** it comprises an electronic control unit (100) configured to receive readings R2 of pressure measurement from said second pressure sensor (40) and control the power on said solenoid valve (20) as soon as R2 ≤ P1max or as soon as R2 ≤ P1sup.

9. Method of measuring the pressure in a compressed gas supply circuit (2) according to any one of claims 7 to 8, comprising the following steps:
- supply the first pressure sensor (10) in the compressed gas supply circuit (2),
- isolate said first pressure sensor (10) from said compressed gas present in said supply circuit (2) when P > P1max,
- expose said first pressure sensor (10) to said compressed gas present in said supply circuit (2) when P ≤ P1sup,
- carry out first pressure measurement readings R1 with said first pressure sensor (10) when said first pressure sensor (10) is exposed to said compressed gas present in said supply circuit (2).

10. The method according to the preceding claim comprising the following steps:
- supply the second pressure sensor (40) in the compressed gas supply circuit (2),
- expose said second pressure sensor (40) to said compressed gas present in said supply circuit (2) when P > P1sup,
- carry out second pressure measurement readings R2 with said second pressure sensor (40) when said second pressure sensor (40) is exposed to said compressed gas present in said supply circuit (2).

11. Method for checking the plausibility of the operation of a pressure measuring device (1) in a compressed gas supply circuit (2) according to any one of claims 7 to 8, comprising the following steps:
- supply the first pressure sensor (10) in the compressed gas supply circuit,
- supply the second pressure sensor (40) in the compressed gas supply circuit,
- expose said first pressure sensor (10) to said compressed gas present in said supply circuit (2) when P ≤ P1sup,
- expose said second pressure sensor (40) to said compressed gas present in said supply circuit (2) when P ≤ P1sup,
- carry out first pressure measurement readings R1 with said first pressure sensor (10),
- carry out second pressure measurement readings R2 with said second pressure sensor (40),
- perform an algorithm for checking the plausibility of said first readings R1 and said second readings R2 to detect a malfunction of said first (10) and / or said second (40) pressure sensor.
